# EUROPEAN PATENT SPECIFICATION

(11) **EP 4 733 087 B1**
(45) Date of publication and mention of the grant of the patent: **02.12.2026**
(21) Application number: 24208095.0
(22) Date of filing: 22.10.2024
(51) Int. Cl.: B60C 11/12

(54) **A TREAD BLOCK ARRANGEMENT HAVING A SIPE, AND A LAMELLA PLATE**
LAUFFLÄCHENBLOCKANORDNUNG MIT EINER LAMELLE UND LAMELLENPLATTE
AGENCEMENT DE BLOC DE BANDE DE ROULEMENT AYANT UNE LAMELLE ET UNE PLAQUE DE LAMELLE

(43) Date of publication of application: 29.04.2026
(73) Proprietor: Nokian Renkaat Oyj, 37101 Nokia (FI)
(72) Inventor: KORKAMA, Tomi, 37101 Nokia (FI)
(74) Representative: Berggren Oy

(56) References cited:
- EP-B1- 2 773 519
- JP-B2- 5 192 363
- US-A1- 2016 052 346

## Description

### Technical field

The present invention relates to a tyre or a tread band having tread blocks, and being provided in the tread blocks with sipes, more particularly to an improved sipe structure or sipe arrangement of a tread block. The present invention also relates to lamella plates that are used in the manufacturing process of a pneumatic tyre for making said sipe structure or sipe arrangement.

### Background

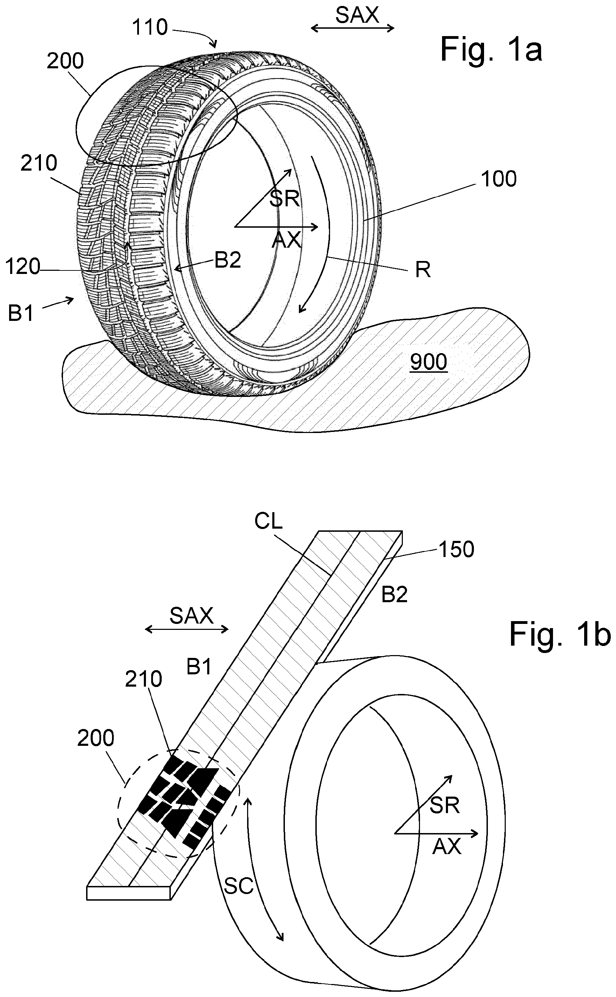

A pneumatic tyre 100 is indicated in Fig. 1a. The pneumatic tyre 100 is known to include a tread 110 which has circumferential and transversal grooves 120 on its outer surface, said grooves 120 defining a number of protruding parts, such as ribs and tread blocks 210. The tread 110 is meant for a rolling contact against a ground surface 900, such as road. The grooves 120 are meant for draining water and/or slush that is possibly located on the ground surface away from the tread, so that the contact between the tread 110 and the ground surface 900 is as good and consistent as possible. A tread 110 of the tyre 100 can be formed by applying a tread band 150 onto a body of a tyre as depicted in Fig. 1b.

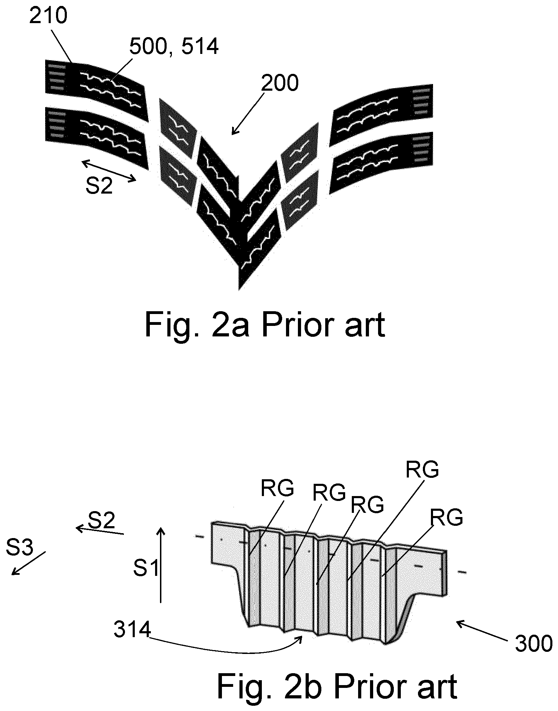

Referring to Fig. 2a, certain types of tyres such as winter tyres are provided in the tread with a number of sipes 500 at various angles with respect to a motion direction of the tyre. The sipes 500 serve a better tyre-ground contact by providing more gripping edges, and particularly in rain by trapping water or on snow by trapping slush/snow, thereby improving traction, braking and lateral stability. The sipes 500 also make the rubber material to deform more easily, in effect making the tyre appear softer. This also improves friction. Sipes 500 are formed during manufacturing a tyre 100 (or a tread band 150), e.g. by inserting a lamella plate 300, such as one of Fig. 2b, to a green tyre (or a tread band 150), and after curing the tyre, removing the lamella plate 300 from the tyre 100 (or the tread band 150).

A known lamella plate 300 may have a constant thickness as shown in Fig. 2b. Moreover, a lamella plate 300 often includes ridges (RG) to form a zig-zap, an undulating, or a stepped shape of the sipe. Typically such ridges (RG) extend at least mainly straight from bottom to top, which therefore applies to the sipe as well.

The document US 2016/0052346 A1 discloses a tread kerf. The tread kerf is formed in the outer surface of a tread block of the snow tire in a depth direction of the block in a shape of a polygonal wave extending along the outer surface of the block, wherein the entrance distance of the polygonal wave is less than the bottom distance of the polygonal wave such that side surfaces between the entrance and the bottom of the polygonal wave are formed as inclined surfaces, the distance between which decreases toward the entrance. The document JP 5 192363 B discloses a pneumatic tire. In the pneumatic tire, a center land section and second land sections are formed in a tread section divided by a circumferential main groove and a lag groove. A width direction sipe and a circumferential sipe shallower than the width direction sipe are formed in these land sections. In the width direction sipe, bidirectional ridges are formed on one of the sipe wall surfaces, and bidirectional valleys engaged with the bidirectional ridges are formed in the other sipe wall surface. The document EP 2 773 519 B1 relates to a vehicle pneumatic tire having a tread which is comprised of profile elements, wherein at least one profile element has a fine recess which extends in the radial direction from the tread periphery into the profile element interior and which has corresponding fine recess walls in the shape of a sine wave. In order to improve the performance of the tire, in particular the winter tire, according to that invention the wave length of the fine recess changes, proceeding from the tread periphery in the direction of the profile element interior.

### Summary

The inventors have realized that when steering the vehicle equipped with the tyre to change the direction of the vehicle, the forces generated by the ground and the vehicle in combination are directed in a different manner than when driving straight. As a result, the inventors have found that the walls of the sipe are not optimally supported to each other, if grooves on the sipe walls, formed by the ridges RG of the lamella plate 300, are directed substantially radially in the tire. To improve the supporting effect of the sipe walls particularly in view of steering (e.g. driving on a curve and/or otherwise changing the direction of the vehicle) the inventor tested different shapes for the sipes.

In line with the invention, the sipe deflection lines formed by the ridges of the lamella plate used to form the sipe, are arranged inclined relative to a direction of depth of the sipe. As a result, the geometry of the sipe creates stronger locking towards the lateral force caused by steering. As a result, the tread block comprising the sipe is stiffer against these forces, but the sipe does not sacrifice other benefits of siping. Thus, the handling of the tyre is improved without compromising with other properties.

The invention is disclosed in more specific terms in independent claims 1 and 10.

### Brief description of the drawings

- Fig. 1a: shows a tyre in a perspective view,
- Fig. 1b: shows application of a tread band onto a body of a tyre,
- Fig. 2a: shows sipes of a unworn known tyre,
- Fig. 2b: shows a known lamella plate,
- Fig. 3a: shows an embodiment of a sipe in a first side view,
- Fig. 3b: shows the sipe of Fig. 3a in a second, opposite, side view,
- Fig. 3c: shows the sipe of Fig. 3a in a top view,
- Fig. 3d: shows an undulating sipe in a top view,
- Fig. 3e: shows a stepped sipe in a top view,
- Fig. 3f: shows a sipe having a zig-zag shape in a top view,
- Fig. 3g: shows an embodiment of a sipe in a first side view,
- Fig. 3h: shows an embodiment of a lamella plate in a first side view,
- Fig. 4a: shows an embodiment of a sipe in a first side view together with some measures of the sipe,
- Fig. 4b: shows an embodiment of a sipe in a first side view together with some measures of the sipe,
- Fig. 5: shows two sipes in a first side view, the sipes being arranged on opposite sides of circumferential line of a tyre or a tread band,
- Fig. 6a: shows an embodiment of a sipe in a first side view, the sipe having a sipe recess provided in a wall groove,
- Fig. 6b: shows the embodiment of Fig. 6a in a second, opposite, side view, showing a corresponding sipe bulge arranged on a wall ridge,
- Fig. 7a: shows an embodiment of a sipe in a first side view, the sipe having a sipe recess provided between wall grooves,
- Fig. 7b: shows the embodiment of Fig. 7a in a second, opposite, side view, and a sipe bulge,
- Fig. 8a: shows an embodiment of a sipe in a first side view, the sipe having a first sipe slot extending across sipe grooves,
- Fig. 8b: shows the embodiment of Fig. 8a in a second, opposite, side view, showing also a sipe crest extending across sipe ridges,
- Fig. 9a: shows, in a side view, an embodiment of a lamella plate for forming a sipe,
- Fig. 9b: shows, in a perspective view, the embodiment of Fig. 9a,
- Fig. 10: shows, in a side view, an embodiment of a lamella plate for forming a sipe,
- Fig. 11a: shows, in a first side view, an embodiment of a lamella plate for forming a sipe,
- Fig. 11b: shows, in an opposite second side view, the embodiment of Fig. 11a,
- Fig. 12a: shows, in a side view, an embodiment of a lamella plate for forming a sipe, and
- Fig. 12b: shows, in a perspective view, an embodiment of a lamella plate for forming a sipe.

In the figures, the three direction S1, S2, and S3 are orthogonal. S2 is a direction of a length of a sipe, S3 is a direction of a width of a sipe, and S1 is a direction of a depth of a sipe, directed from bottom to top. In the figures, a dot (•) denotes a direction towards the reader and a cross mark (×) denotes a direction away from the reader.

### Detailed description

In this description at least the following terms are used:
A sipe refers to a slit provided in a tread block of a tyre. A width of a sipe may be e.g. 0.2 mm to 1.0 mm, typically 0.2 mm to 0.7 mm, such as 0.2 mm to 0.5 mm. As direction of a width of the sipe is in this description generally denoted by the direction S3.

A lamella plate refers to a plate that is usable for forming a sipe in a moulding process. Thus, when a lamella plate is embedded to uncured rubber, and removed therefrom after curing the rubber, the shape of the sipe formed by the lamella plate is geometrically congruent with the lamella plate.

A lamella refers to a part of rubber arranged in between two sipes.

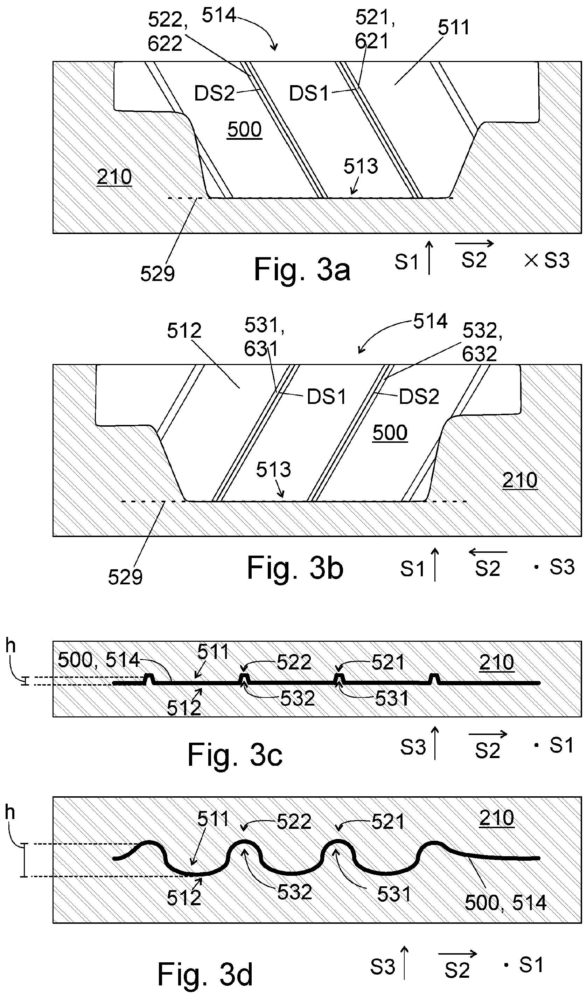

In the figures, the direction S1 denotes a direction of depth of a sipe or a corresponding direction of a lamella plate. In a tyre 100, the direction S1 may be substantially parallel with the radial direction SR of the tyre (see Fig. 1a). The direction S2 denotes a direction of a length of the sipe or a corresponding direction of a lamella plate. The direction S3 denotes a direction of a width of the sipe or a corresponding direction of a lamella plate. Reference is made to Fig. 2b. In the figures, a direction, such as S3, together with a cross (as in Fig. 3a) denotes a direction that is perpendicular to the plane of the figure and away from the reader. In the figures, a direction, such as S3, together with a dot (as in Fig. 3b) denotes a direction that is perpendicular to the plane of the figure and towards the reader.

Referring to Fig. 1a, as is well known, a tyre 100 comprises a tread 110. The tread is formed of multiple tread blocks 210, 220, which in combination form a tread block arrangement 200. Referring to Fig. 2a, each tread block 210 may comprise a number of sipes 500. Even if Figs 1a and 2a are showing prior art, these terms and principles apply to the present invention, too. The present invention concerns a shape of a sipe 500.

Referring to Fig. 3a, a sipe 500, which is delimited by the tread block 210, further has a top opening 514, which is visible on the tread. Namely, the part of the sipe 500 shown e.g. in Fig. 2a is just the top opening of the sipe 500. The shape of the sipe 500 beneath the tread surface is, generally, not visible to naked eye.

The bottom 513 of the sipe 500 defines a bottom line 529 of the sipe 500. The bottom line may be substantially straight. In Fig. 3a, the direction S1 is a direction of depth of the sipe 500 and this direction S1 typically is the radial direction SR of the tyre (see also Fig. 1a). However, the direction S1 may be tilted relative to SR according to needs. In Fig. 3a, the direction S2 is a direction of length of the sipe 500. This direction S2 typically is more or less aligned with a direction of length of the tread block, which typically is not circumferential. Reference is made to Fig. 2a for the direction S2. The direction S3 is perpendicular to both the direction S1 and the direction S2. A width of the sipe 500 is measurable in the direction S3.

Referring to Figs. 3c-3f, the sipe 500 is arranged between two sipe walls (511, 512), the sipe walls being comprised by the tread block 210. These sipe walls are called a first sipe wall 511 and second sipe wall 512. The tread block 210 also forms the bottom 513 of the sipe 500.

The embodiments relate to tread block arrangement 200. The tread block arrangement 200 is suitable for a tyre 100 or for a tread band 150 for a tyre 100. The tread block arrangement 200 comprises a tread block 210. The tread block 210 comprises at least a first sipe 500. The embodiments relate also to a tyre comprising the tread block arrangement 200 forming the tread of the tyre. The embodiments relate also to a lamella plate.

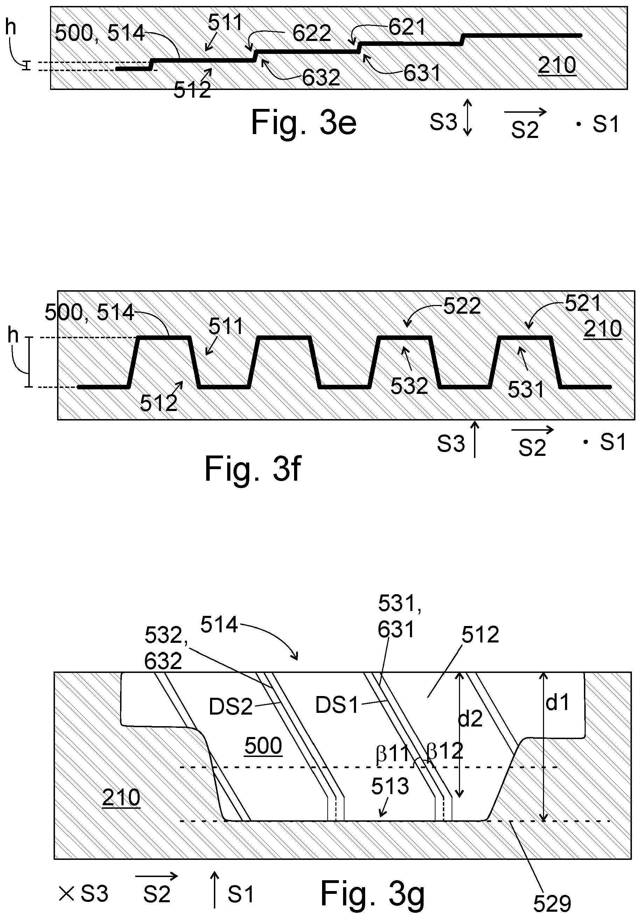

In an embodiment, the first sipe 500 is delimited by a first sipe wall 511, a second sipe wall 512, and a bottom 513 of the first sipe 500. The first sipe 500 comprises the top opening 514. In the embodiment, the top opening 514 of the first sipe 500 has a grooved pattern or a stepped pattern, the groves and/or steps forming e.g. an undulating or a zig-zag pattern. Figs. 3c and 3f show an examples of a zig-zag pattern, Fig. 3d shows an example of an undulating pattern, and Fig. 3e shows an example of a stepped pattern.

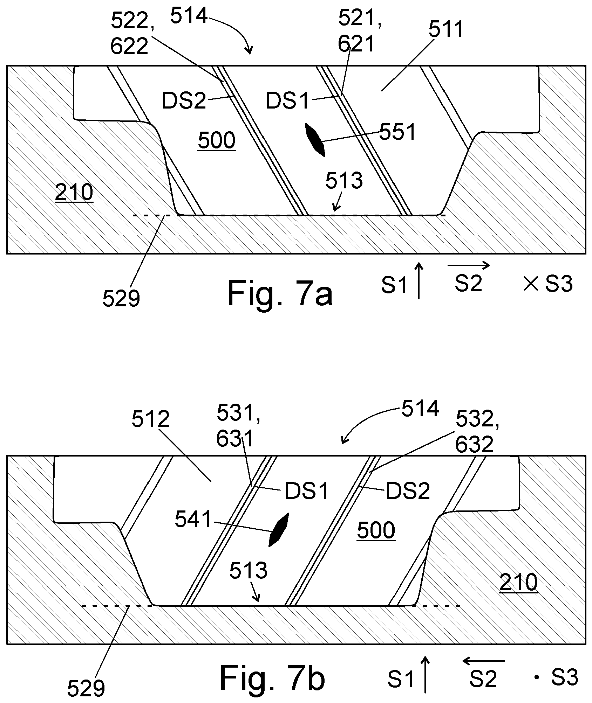

Referring to Figs. 3c to 3f, the first sipe wall 511 and the second sipe wall 512 are arranged parallel to each other. In the first sipe 500, the bottom 513 of the first sipe 500 is arranged away from the top opening 514 such that the bottom 513 defines a bottom line 529 of the first sipe 500. The first sipe wall 511 and the second sipe wall 512 may be geometrically congruent with each other. This happens e.g. when the lamella plate 300 used to form the sipe 500 has a constant thickness. However, the lamella plate 300 may be provided with lamella plate expansions in order to form cavities to the sipe as detailed below particularly in the context of the sipe of Figs. 7a and 7b.

To improve the stiffness of the tread block particularly against lateral forces, the first sipe wall 511 and the second sipe wall 512 are provided with geometrically congruent elements that extend inclined relative to direction of depth of the sipe, such as a radial direction of the tyre. These elements may be wall ridges, wall grooves, or steps. A wall ridge may interact and form a locking with a corresponding wall groove. A first wall step may interact and form a locking with a corresponding second wall step. In view of Figs. 3c and 3f, the wall ridges (531, 532) and the wall grooves (521, 522) may have a polygonal shape. In view of Fig. 3d, the wall ridges (531, 532) and wall grooves (521, 522) may have a rounded shape. In view of Fig. 3e, whole grooves or ridges are not needed; instead a half-groove, i.e. a step, may suffice. Thus, a primary first wall step 621 may form locking with a primary second wall step 631. Even if not shown, a half-groove (i.e. a step) could also be rounded.

Referring to Fig. 3a, the tread block 210 comprising the first sipe 500 comprises a first wall groove 521 or a primary first wall step 621. The first wall groove 521 or the primary first wall step 621 is arranged on the first sipe wall 511. As shown in Figs. 3a and 3c, the first wall groove 521 intrudes e.g. in the positive direction S3. Moreover, as shown in Fig. 3a, the first wall groove 521 or a primary first wall step 621 defines a first sipe deflection line DS1. The first wall groove 521 or the primary first wall step 621 extends along the first sipe deflection line DS1 and has a constant shape while extending along the first sipe deflection line DS1. Fig. 3c shows a top view of an embodiment, wherein a first wall groove 521 is arranged on the first sipe wall 511. Fig. 3e shows a top view of an embodiment, wherein a primary first wall step 621 is arranged on the first sipe wall 511.

To lock the sipe walls 511, 512 to each other and to form the supportive effect against lateral forces, the first sipe 500 comprises a first wall ridge 531 or a primary second wall step 631. The first wall ridge 531 or the primary second wall step 631 is arranged on the second sipe wall 512 opposite the first wall groove 521. The first wall ridge 531 or a primary second wall step 631 is geometrically congruent with the first wall groove 521 or the primary first wall step 621, respectively, to provide for the mechanical locking and supportive effect. As shown in Figs. 3b and 3c, the first wall ridge 531 protrudes e.g. in the positive direction S3. Moreover, as shown in Figs. 3a and 3b, the first wall ridge 531 or a primary second wall step 631 also defines the first sipe deflection line DS1, because the first wall ridge 531 or the primary second wall step 631 is geometrically congruent with the first wall groove 521 or the primary first wall step 621, respectively, and opposite thereto, as explained above. Notably, the directions S2 and S3 in Figs. 3a and 3b are reversed relative to each other, because different sipe walls 511, 512 are shown. In both figures 3a and 3b, the sipe wall (511, 512) is shown form the side that is exposed to the sipe 500.

Thus, the first wall ridge 531 or the primary second wall step 631 extends along the first sipe deflection line DS1 and has a constant shape while extending along the first sipe deflection line DS1. Figs. 3c, 3d, and 3f show a top views of embodiments, wherein a first wall ridge 531 is arranged on the second sipe wall 512. Fig. 3e shows a top view of an embodiment, wherein a primary second wall step 631 is arranged on the second sipe wall 512.

Referring to Figs. 3a and 3b, the shape of the sipe walls 511, 512 define, in a similar manner, also a second sipe deflection line DS2. Thus, the tread block 210 comprises, on the first sipe wall 511, a second wall groove 522 or a secondary first wall step 622, which defines a second sipe deflection line DS2. Moreover, the tread block 210 comprises, on the second sipe wall 512 opposite the second wall groove 522 or the secondary first wall step 622, respectively, a second wall ridge 532 or a secondary second wall step 632 geometrically congruent with the second wall groove 522 or the secondary first wall step 622, respectively.

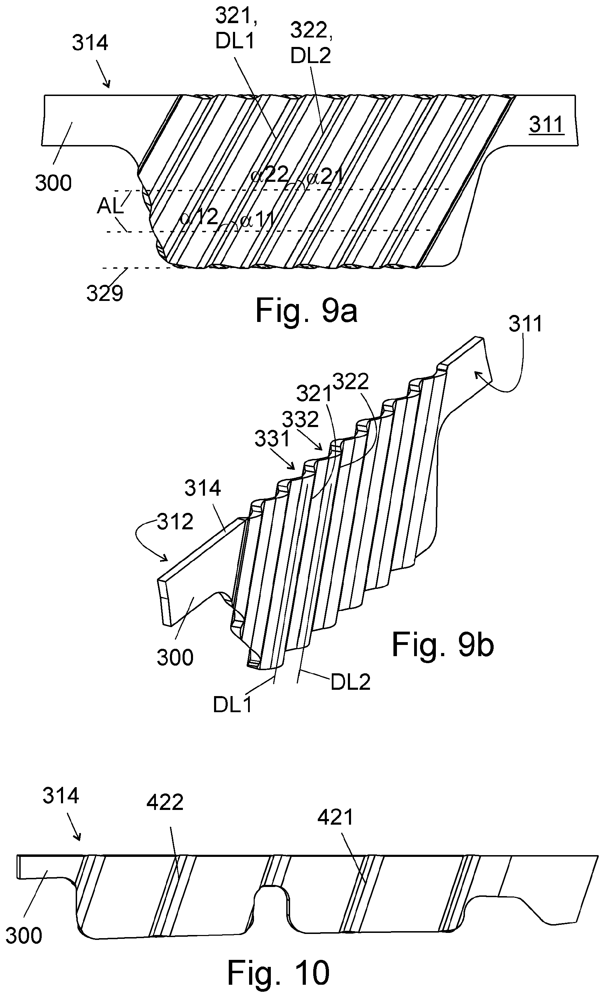

Referring to Figs. 3a, 3b, and 3g, the first sipe deflection line DS1 extends between the bottom 513 and the top opening 514, and the second sipe deflection line DS2 extends between the bottom 513 and the top opening 514. Moreover, at least a part of the first sipe deflection line DS1 extends straight and inclined relative to a direction S1 of the depth of the sipe 500. Likewise, at least a part of the second sipe deflection line DS2 extends straight and inclined relative to a direction S1 of the depth of the sipe 500. In the embodiment shown in Figs. 3a and 3b, the whole first sipe deflection line DS1 extends straight and the whole second sipe deflection line DS2 extends straight. Preferably, the first sipe deflection line DS1 is parallel to the second sipe deflection line DS2. Even if not shown by reference numerals, the first sipe wall 511 may be provided with a third wall groove or a tertiary first wall step, which defines a third sipe deflection line. Likewise, the tread block 210 may comprise, on the second sipe wall 512 opposite the third wall groove or the tertiary first wall step, respectively, a third wall ridge or a tertiary second wall step geometrically congruent with the third wall groove or the tertiary first wall step, respectively. In such a case, preferably, the third sipe deflection line is parallel to the second sipe deflection line DS2. For such deflection lines, see Figs. 9a to 12b.

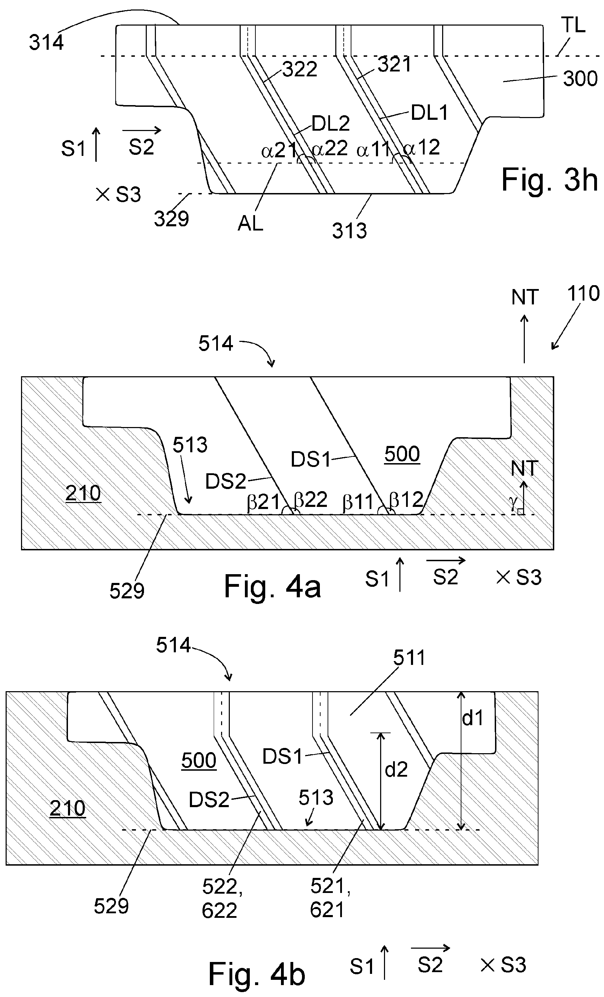

Referring to Fig. 3g, the first sipe deflection line DS1 does not need to extend straight to/from the bottom 513 of the sipe. However, at least a part of the first deflection defined by the first wall groove 521 or the primary first wall step 621 line extends straight and inclined relative to the direction S1 of depth of the sipe 500. The term straight and inclined indicates that a part deflection line is straight and the straight part is not parallel with a direction of depth of the sipe. The term inclined will be elaborated below together with a preferable angle of inclination defined by a first primary sipe angle β11 (see Figs. 3g and 4a). In Fig. 3g, the straight parts of the first sipe deflection lines DS1, DS2 that are also inclined have been shown by solid lines and the such parts that are not inclined have been shown by dotted line. This applies to Fig. 4b, too. In connection with a lamella plate 300 this applies to the deflection lines DL1, DL2 as shown in Fig 3h.

Referring to Fig. 3h, a lamella plate 300 used for forming the sipe 500 comprises ridges (321, 322) or footsteps configured to form the sipe deflection lines DS1, DS2. However, as shown in Fig. 3h, the rides (321, 322) or the footsteps configured to form the sipe deflection lines DS1, DS2 of the sipe 500 do not need to extend straight to a top edge 314 of the lamella plate 300. However, as shown in Figs. 9a, 9b, 10, 11, 12a and 12b, preferably the parts configured to form the sipe deflection lines DS1, DS2 of the sipe 500 (the parts being in the form of the ridges or the footsteps) extend straight to a top edge 314 of the lamella plate 300.

To provide a reasonably supportive effect, on one hand the part of the first sipe deflection line DS1 that is straight and extends inclined, which is shown by the respective solid line in Figs. 3b and 3g (and 3a and 3b, wherein the whole deflection line is straight) should extend a reasonably long way between the bottom 513 and the top edge 514. To clarify, a depth d1 of the first sipe 500, measured as a distance between the top opening 514 and the bottom 513 can be denoted by d1, as shown in Figs. 3g and 4b. Moreover, a length of the part of the first sipe deflection line DS1 that is straight and extends inclined, projected to the direction S1 of the depth of the first sipe can be denoted by d2, as shown in Figs. 3g and 4b. In view of the supportive effect, in an embodiment, d2 is at least half of d1, i.e. d2 ≥ 0.5×d1; preferably d2 ≥ 2/3×d1. Notably, a length of the part of the first sipe deflection line DS1 that is straight and extends inclined is more than d2, because of the inclination of the straight part. As shown in Figs. 3g and 4b, d2 is the length of the projection of this part on a plane having a normal to the direction S2 of the length of the first sipe, and thereby the plane comprising the direction S1 of the depth d1 of the first sipe 500. These measures apply *mutatis mutandis* to the length of the straight part of the second sipe deflection line DS2 that extends inclined. d2 can be called a depth of the straight part of the sipe deflection line DS1, DS2.

To provide a reasonably supportive effect, on the other hand, a height h of the first wall ridge 531 or the primary second wall step 631, whichever is present in the sipe 500, is 0.5 mm to 8 mm, preferably 1 mm to 2.5 mm. These measures apply also to the second wall ridge 532 or the secondary second wall step 632; as well as for further sipe ridges and further second wall steps. These measures apply also to the lamella plate 300. Thus, a depth of the first groove 331 or a height the primary second footstep 431 is 0.5 mm to 8 mm, preferably 1 mm to 2.5 mm.

For similar reasons, a depth of the first wall groove 521 or a height h of the primary first wall step 621, whichever is present in the sipe 500, is 0.5 mm to 8 mm, preferably 1 mm to 2.5 mm. These measures apply also to the second wall groove 522; as well as for further sipe ridges and further first wall steps. These measures apply also to the lamella plate 300. Thus, a height of the first ridge 321 or a primary first footstep 421 is 0.5 mm to 8 mm, preferably 1 mm to 2.5 mm.

With reference to Figs. 3c-3f the height h of the first wall ridge 531 or the primary second wall step 631, whichever is present in the sipe 500, is defined in a direction that is perpendicular to the direction S1 of the depth of the sipe, e.g. in the direction S3. Likewise, the depth of the first groove 331 or the height the primary second footstep 431 is defined in a direction that is perpendicular to the direction S1 of the depth of the sipe, e.g. in the direction S3.

As detailed in connection with background, the first sipe may be made by using a lamella plate 300. For example, the first sipe shown in Figs. 3a to 3c may be made by a lamella plate 300 shown in Fig. 3h. For example, the lamella plate 300 of Fig. 3h may be inserted into a tread block so that that a top line TL of the lamella plate 300 is arranged to form a top opening 514 of the sipe 500. However, the lamella plate 300 of Fig. 3h may be inserted deeper into a tread block so that that the deflection lines DL defined by the top opening 514 of the first sipe 500 will extend a certain distance perpendicular to the plane of the tread, i.e. not in an inclined manner. Lamella plates having inclined ridges are shown also in Figs. 9a to 12b.

Figs. 9a and 9b show an embodiment of a lamella plate 300. The lamella plate 300 is for forming a first sipe 500 to a tread block 210 of a tread block arrangement 200 for a tyre 100 or, alternatively, the lamella plate 300 is for forming a first sipe 500 to a tread block 210 of a tread block arrangement 200 for a tread band 150 for a tyre 100. The lamella plate 300 comprises a first surface 311 for forming a first sipe wall 511 of the first sipe 500, a second surface 312 opposite to the first surface 311 for forming a second sipe wall 512 of the first sipe 500, a bottom edge 313 for forming a bottom 513 of the first sipe 500, and a top edge 314 opposite the bottom edge 313.

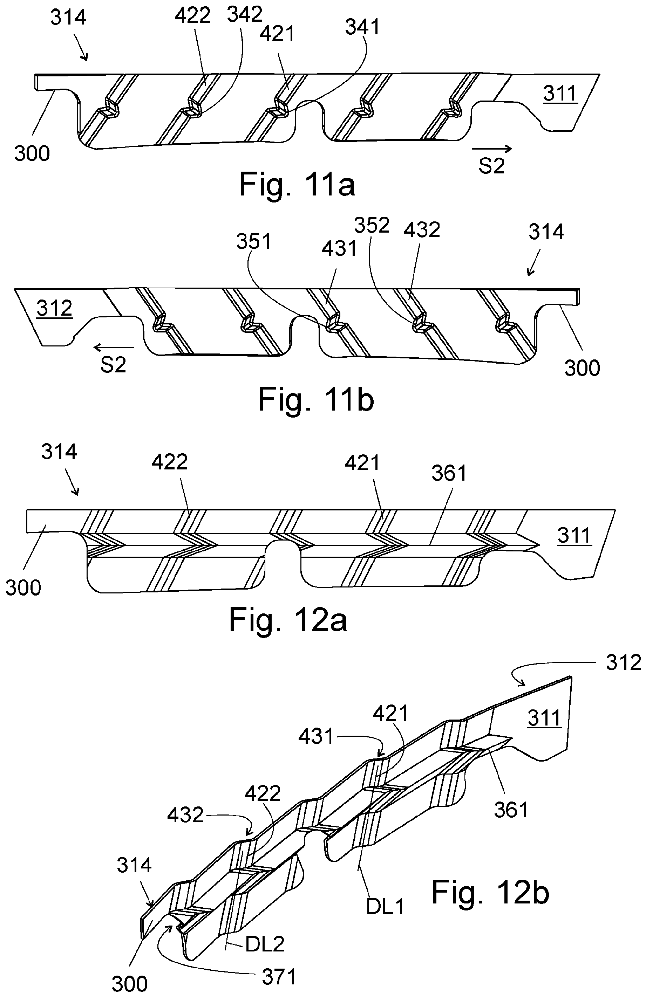

The embodiment of Figs. 9a and 9b comprises, on the first surface 311, a first ridge 321 that defines a first deflection line DL1. As an alternative, the first surface 311 may be provided with a primary first footstep 421 as shown in Figs. 12a and 12b. In the embodiments of Figs. 9a, 9b, the first ridge 321 defines the first deflection line DL1. In this way, the lamella plate 300 comprises, on the first surface 311, a first ridge 321 or a primary first footstep 421 defining a first deflection line DL1. The first deflection line DL1 of the lamella plate 300 is arranged to form the first sipe deflection line DS1 of the sipe 500.

To form a looking shape for the primary first footstep 421 or the first ridge 321, the lamella plate 300 comprises on the second surface 312 opposite the first ridge 321 or the primary first footstep 421, a first groove 331 or a primary second footstep 431, respectively. As an example, in Fig. 9b, the first groove 331 is arranged on the second surface 312 and opposite the first ridge 321, which is arranged on the first surface 311. In a similar manner, in Fig. 12b, the primary second footstep 431 on the second surface 312 is arranged opposite the primary first footstep 421, which is on the first surface 311. The first groove 331 or the primary second footstep 431 is geometrically congruent with the first ridge 321 or the primary first footstep 421, respectively.

Likewise the shape of the lamella plate 300 defines a second deflection line DL2 on the first and second surfaces 311, 312. Thus, the lamella plate 300 comprises on the first surface 311, a second ridge 322 (see Fig. 9b) or a secondary first footstep 422 (see Fig. 12b) defining a second deflection line DL2, and on the second surface 312 opposite the second ridge 322 or the secondary first footstep 422, a second groove 332 (see Fig. 9b) or a secondary second footstep 432 (see Fig. 12b), respectively, geometrically congruent with the second ridge 322 or the secondary first footstep 422, respectively.

To form such a first sipe 500 that is stiff against lateral forces, at least a part of the first deflection line DL1 extends between the bottom edge 313 and the top edge 314 straight and inclined and at least a part of the second deflection line DL2 extends between the bottom edge 313 and the top edge 314 straight and inclined. Preferably, the first deflection line DL1 is parallel to the second deflection line DL2.

The inventors have found that when steering the vehicle, an outer side of the tyre is exposed to higher lateral forces than an inner side. Thus, preferably, sipes on an outer side of the tread block arrangement 200 are configured to resist lateral forces. The inventors have found that a direction of inclination affects the resistance of the tread blocks against lateral forces.

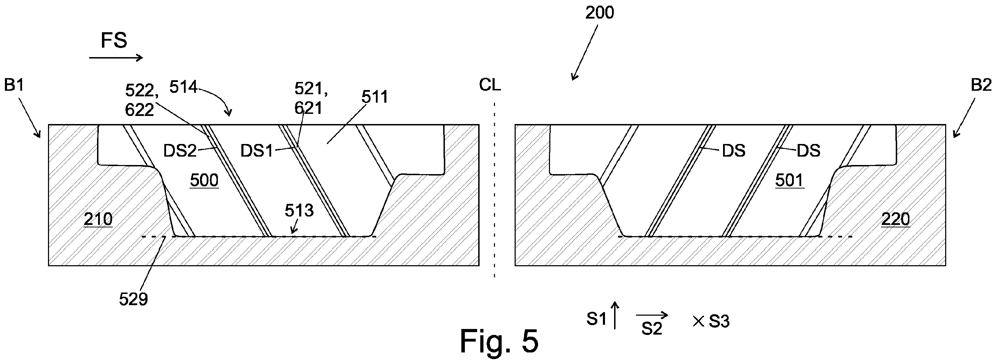

Referring to Fig. 5, in a tread block arrangement 200, the sipe deflection lines DS1, DS2 are preferably oriented so as to incline, on an outer side of the tread block arrangement, both radially and axially outward; and on an inner side of the tread block arrangement, both radially outward and axially inward.

More specifically, an embodiment of a tread block arrangement 200 comprises the tread block 210 having the first sipe 500 as discussed above. In addition, the tread block arrangement 200 comprises a second tread block 220 comprising a second sipe 501. The first sipe 500 defines the sipe deflection lines DS1 and DS2 as discussed above and shown in Fig. 5.

The tread block arrangement 200 comprises a first boundary B1 and a second boundary B2 so that the whole tread block arrangement 200 remains between the first boundary B1 and a second boundary B2. The first sipe 500 is arranged closer to the first boundary B1 than to the second boundary B2. A circumferential line CL is definable between the first boundary B1 and a second boundary B2. Herein the term "circumferential" refers to a tyre, once the tread block arrangement is arranged on a body of a tyre. In a tread band, a longitudinal line defines the circumferential line CL (see Fig. 1b).

As detailed above, the first sipe deflection line DS1 is arranged inclined so that it extends in a radially outward direction towards the first boundary B1. More specifically, at least a part of the first sipe deflection line DS1 extends between the bottom 513 and the top opening 514 straight and inclined such that the closer to the top opening 514 a point of the first sipe deflection line DS1 is, the closer the point of the first sipe deflection line DS1 is to the first boundary B1. Likewise, at least a part of the second sipe deflection line DS2 extends between the bottom 513 and the top opening 514 straight and inclined such that the closer to the top opening 514 a point of second sipe deflection line DS2 is, the closer the point of the second sipe deflection line DS2 is to the first boundary B1. Reference is made to Fig 5 (left-hand side thereof).

For example, when the vehicle having a tyre having the tread block arrangement 200 is steered in such a way that first boundary B1 of Fig. 5 is arranged on an outer side of the curve that the vehicle is steered on, the lateral forces generated by the steering are oriented mainly in the direction FS shown in Fig. 5. As readable from Fig. 5, then the sipe walls 511, 512 lock to each other, e.g. the wall grooves 521, 522 lock with the wall ridges 531, 532, so as not to slip relative to each other.

However, when the vehicle having a tyre having the tread block arrangement 200 is steered in such a way that second boundary B2 of Fig. 5 is arranged on an outer side of the curve that the vehicle is steered on, the lateral forces generated by the steering are oriented in the opposite direction. Therefore, in the second sipe 501 of the second tread block 220, the deflection lines DS are inclined in the radial direction and towards the second boundary B2.

Referring still to Fig. 5, a sipe deflection line DS of the second sipe 501 is arranged inclined so that it extends in a radially outward direction towards the second boundary B2. More specifically, at least a part of a sipe deflection line DS of the second sipe 501 extends between a bottom and a top opening of the second sipe 501 straight and inclined such that the closer to the top opening of the second sipe 501 a point of the sipe deflection line DS of the second sipe 501 is, the closer the point of the sipe deflection line DS of the second sipe 501 is to the second boundary B2. Reference is made to Fig. 5 (right-hand side thereof). For the reasons detailed above, in an embodiment, the first tread block 210 is arranged between the first boundary B1 and the second tread block 220; and the second tread block 220 is arranged between the second boundary B2 and the first tread block 210. In Fig. 5, a circumferential line CL is definable in between the first tread block 210 having the first sipe 500 and the second tread block 220 having the second sipe 501. Preferably the circumferential line CL is a central circumferential line dividing the tread block arrangement to two equally large parts.

The lamella plate 300 as discussed above is preferably used such that when the first sipe 500 is formed, the sipe deflection lines extend as discussed above.

As for the degree of the inclination, reference is made to Figs. 3g and 4a. As shown in Figs. 3g and 4a, the bottom 513 defines a bottom line 529. The bottom line 529 is e.g. a line, optionally slightly curved, that is perpendicular to a normal of the bottom 513 at the point, from which the first sipe deflection line DS1 extends. Typically, the bottom 513 is substantially planar, and in such a case, the bottom line 529 is comprised by the bottom 513. The bottom line 529 extends at least in a direction S2 of a length of the first sipe 500.

Referring to Figs. 3g and 4a, the first sipe deflection line DS1 extends between the bottom line 529 and the top opening 514. Referring to Fig. 4a, in an embodiment, the first sipe deflection line DS1 is straight, whereby the first sipe deflection line DS1 extends from the bottom line 529 such that a first primary sipe angle β11 is arranged between the first sipe deflection line DS1 and the bottom line 529 on a first side of the bottom line 529. Likewise, a first secondary sipe angle β12 is arranged between the first sipe deflection line DS1 and the bottom line 529 on the first side of the bottom line 529. These angles are defined such that the first primary sipe angle β11 is smaller than the first secondary sipe angle β12. However, referring to Fig. 3g, in an embodiment, only a part of the first sipe deflection line DS1 is straight, and the straight part of the first sipe deflection line DS1 extends between the bottom 513 and the top opening 514 such that a first primary sipe angle β11 is arranged between the straight part of the first sipe deflection line DS1 and a line that is parallel to the bottom line 529 on a first side of the line that is parallel to the bottom line 529. Likewise, a first secondary sipe angle β12 is arranged between the straight part of the first sipe deflection line DS1 and a line that is parallel to the bottom line 529 on a second side of the line that is parallel to the bottom line 529. These angles are defined such that the first primary sipe angle β11 is smaller than the first secondary sipe angle β12.

Thus, in an embodiment, at least a part of the first sipe deflection line DS1 extends between the bottom 513 and the top opening 514 such that a first primary sipe angle β11 is arranged between a straight part of the first sipe deflection line DS1 and a line that is parallel to the bottom line 529. In an embodiment, the first primary sipe angle β11 is 30 to 85 degrees. Notably and with reference to Fig. 4a, the bottom line 529 is parallel to itself. As shown in 3g and 4a, and to give an alternative definition, the first primary sipe angle β11 is an angle that remains between a line that is parallel to a straight part of the first sipe deflection line DS1 and a tread surface at the location of the sipe.

Likewise, the second sipe deflection line DS2 extends between the bottom 513 and the top opening 514 such that a second primary sipe angle β21 is arranged between a straight part of the second sipe deflection line DS2 and a line that is parallel to the bottom line 529. In an embodiment, the second primary sipe angle β21 is 30 to 85 degrees. In line with what has been said above, the second primary sipe angle β21 is arranged on the first side of the line that is parallel to the bottom line 529; and a second secondary sipe angle β22 is arranged between the second sipe deflection line DS2 and the bottom line 529 on the first side of the line that is parallel to the bottom line 529; and the second primary sipe angle β21 is smaller than the second secondary sipe angle β22. As shown in 3g and 4a, and to give an alternative definition, the second primary sipe angle β21 is an angle that remains between a line that is parallel to a straight part of the second sipe deflection line DS2 and a tread surface at the location of the sipe.

As for the direction of the bottom line 529 of the first sipe 500, the bottom line 529 forms a third angle γ with a normal NT of the tread 110, as depicted in Fig. 4a. The third angle may be e.g. 30 to 90 degree, preferably 75 to 90 degrees. Naturally, the normal NT of the tread 110 forms also another angle with the bottom line 529, but the other angle is at least 90 degrees.

In a similar manner in an embodiment of the lamella plate 300 the bottom edge 313 defines a bottom line 329 (of the lamella plate 300); e.g. the bottom edge 313 comprises a bottom line 329, optionally slightly curved, that extends at least in a direction S2 of a length of the lamella plate 300.

In line with what has been said above, in an embodiment of the lamella plate 300, the first deflection line DL1 extends from the bottom line 329 towards the top edge 314. Moreover, at least a part of the first deflection line DL1 extends straight and inclined between the bottom edge 313 and the top edge 314. The part of the first deflection line DL1 that extends straight and inclined extends inclined relative to a direction of a height of the lamella plate, the height of the lamella plate being defined as a distance between the top edge. The straight part of the first deflection line DL1 extends such that a first primary angle α11 is arranged between the straight part of the first deflection line DL1 and a line AL that is parallel to the bottom line 329 on a first side of the line AL that is parallel to the bottom line 329. In addition, a first secondary angle α12 is arranged between the straight part of the first deflection line DL1 and the line AL that is parallel to the bottom line 329 on the first side of the line AL that is parallel to the bottom line 329. Moreover, the first primary angle α11 is smaller than the first secondary angle α12. Reference is made to Figs. 3h and 9a. Thus, in an embodiment, a straight part of the first deflection line DL1 extends between the bottom edge 313 and the top edge 314 such that a first primary angle α11 is arranged between the straight part of the first deflection line DL1 and a line AL that is parallel to the bottom line 329. Moreover, in an embodiment, the first primary angle α11 is 30 to 85 degrees.

Likewise, at least a part of the second deflection line DL2 extends between the bottom edge 313 and the top edge 314 straight and inclined. The part of the second deflection line DL2 that extends straight and inclined extends inclined relative to a direction of a height of the lamella plate, the height of the lamella plate being defined as a distance between the top edge. In an embodiment, at least a part of the second deflection line DL2 extends between the bottom edge 313 and the top edge 314 such that a second primary angle α21 is arranged between the straight part of the second deflection line DL2 and the line AL that is parallel to the bottom line 329 on a first side of the line AL. Moreover, a second secondary angle α22 is arranged between the straight part of the second deflection line DL2 and the line AL on the first side of the line AL. In addition, the second primary angle α21 is smaller than the second secondary angle α22. Thus, in an embodiment, at least a part of the second deflection line DL2 extends between the bottom edge 313 and the top edge 314 such that a second primary angle α21 is arranged between a straight part of the second deflection line DL2 and a line that is parallel to the bottom line 329. In an embodiment, the second primary angle α21 is 30 to 85 degrees.

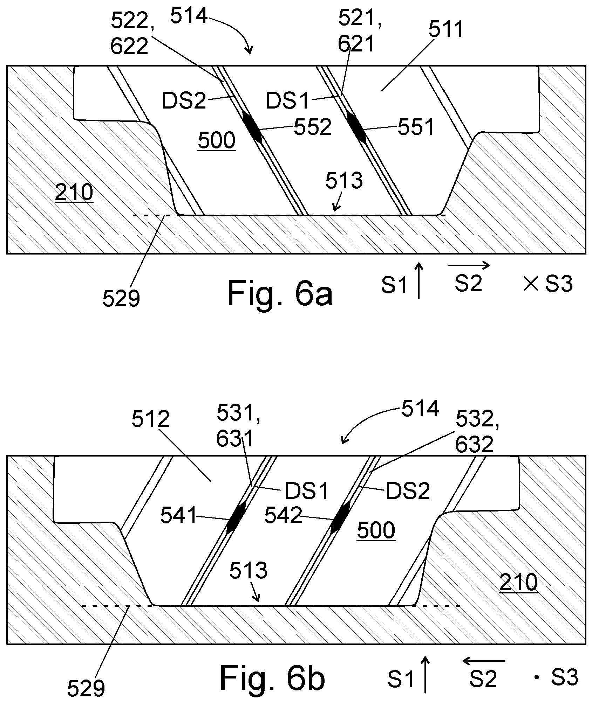

Referring to Figs. 6a, 6b, 7a, and 7b, in an embodiment of the tread block arrangement 200 the tread block 210 comprises a first sipe bulge 541 arranged on the on the second sipe wall 512. The tread block 210 further comprises a first sipe recess 551 arranged in the first sipe wall 511 opposite the first sipe bulge 541. Preferably, the first sipe recess 551 is geometrically congruent with the first sipe bulge 541. The combination of the first sipe bulge 541 and the second first sipe recess 551 provide for improved locking of the sipe walls 511, 512 thereby improving handling of the tyre.

Referring to Figs. 6a and 6b, in an embodiment, the first sipe bulge 541 is arranged on the first wall ridge 531. Because the first sipe recess 551 arranged in the first sipe wall 511 opposite the first sipe bulge 541, the first sipe recess 551 is arranged in the first wall groove 521. Even if not shown, in an embodiment, the first sipe bulge 541 is arranged on primary second wall step 631 and first sipe recess 551 is arranged in primary first wall step 621. As discussed above, the first wall groove 521 and a primary first wall step 621 have mutually the same technical function. Likewise, the first wall ridge 531 and the primary second wall step 631 have mutually the same function.

Moreover, in the embodiment of Figs. 6a and 6b, the tread block 210 further comprises a second sipe bulge 542 arranged on the second wall ridge 532 and a second sipe recess 552 arranged in the second wall groove 522. The second sipe recess 552 is also arranged opposite the second sipe bulge 542.

Preferably, the first sipe recess 551 is geometrically congruent with the first sipe bulge 541 and the second sipe recess 552 is geometrically congruent with the second sipe bulge 542.

Concerning a preferable measure, in an embodiment, a height of the first sipe bulge 541 is 0.25 mm to 2.5 mm, preferably 0.75 mm to 1.5 mm. This applies in particular, when the first sipe bulge 541 is arranged is arranged on the first wall ridge 531 or the primary second wall step 631, as shown in Figs. 6a and 6b. Then, a depth of the first sipe recess 551 is likewise 0.25 mm to 2.5 mm, preferably 0.75 mm to 1.5 mm. The height of the first sipe bulge 541 is defined in a direction that is perpendicular to the direction S1 of the depth of the sipe. Likewise, the depth of the first sipe recess 551 is defined in a direction that is perpendicular to the direction S1 of the depth of the sipe. The height/depth may be defined in the direction S3; or, e.g., if the primary second wall step 631 is reasonably high, in a direction of a normal of a surface of the primary second wall step 631; or the height/depth may be defined in a direction of a normal of a surface of the first wall ridge 531.

Referring to Figs. 7a and 7b, in an embodiment, the first sipe bulge 541 is arranged between the first wall ridge 531 and the second wall ridge 532. Also in this embodiment, preferably, the first sipe recess 551 is geometrically congruent with the first sipe bulge 541. In such a case the sipe recess/bulge in combination improve locking of the sipe walls. Such a locking effect may be achieved, e.g. when a height of the first sipe bulge 541 is 0.1 mm to 4 mm, such as 0.25 mm to 2.5 mm, preferably 0.75 mm to 1.5 mm, and, correspondingly, a depth of the first sipe recess 551 is 0.1 mm to 4 mm, such as 0.25 mm to 2.5 mm, preferably 0.75 mm to 1.5 mm. As above, the height of the first sipe bulge 541 is defined in a direction that is perpendicular to the direction S1 of the depth of the sipe. Likewise, the depth of the first sipe recess 551 in a direction that is perpendicular to the direction S1 of the depth of the sipe. The height/depth may be defined in the direction S3, because the walls of the sipe may comprise a substantially planar parts that have a normal in the direction S3, the parts of the sipe walls being arranged between the first wall ridge 531 and the second wall ridge 532 (or between the primary second wall step 631 and the secondary second wall step 632).

However, when the first sipe recess 551 is arranged between wall grooves 521, 522 as in Fig. 7a, the second sipe wall 512 does not need to comprise a corresponding first sipe bulge 541, even if shown in Fig. 7b. When the first sipe recess 551 is arranged between wall grooves 521, 522 as in Fig. 7a, the first sipe recess 551 functions in isolation from the supportive effect provided by the sipe deflection lines DS1, DS2 and may thus be used for other purposes, such as additional cavities for temporarily storing water and/or snow (and/or slush, which is a mixture of water and snow). Naturally, if the first sipe recess 551 is arranged between wall grooves 521, 522, it may be provided alternatively in the second sipe wall 512. Or, the sipe may comprise a first sipe recess 551 and, at the same location on the other sipe wall, another sipe recess for functioning as an additional cavity. In such a case, a depth of the first sipe recess 551 may be e.g. 0.1 mm to 4 mm such as 0.25 mm to 2.5 mm, preferably 0.75 mm to 1.5 mm, as discussed above. What has been said about the direction of depth of the first sipe recess 551 applies. Moreover, such recess may be formed in the other sipe wall to provide a cavity having a width of up to 2×4 mm plus the width of sipe remaining in between the sipe recesses. Furthermore, when the first sipe recess 551 is used as an additional cavity for temporarily storing water and/or snow, a length of the first sipe recess 551 measured in the longitudinal direction S2 of the sipe 500 is preferably 4 mm to 20 mm, and more preferably 6 mm to 12 mm. These measures also ensure proper volume for storing water and/or snow in the first sipe recess 551.

Even if not shown in the figures, in an embodiment, the sipe 500 comprises:
- the first sipe bulge 541 on the first wall ridge 531 and the first sipe recess 551 in the first sipe wall 511 opposite the first sipe bulge 541 as shown in Figs. 6a and 6b, and readable from Figs. 11a and 11b, and
- another sipe recess in between the sipe deflection lines DS1, DS2 for the purpose of storing water and/or snow, as shown by the reference numeral 551 in Figs. 7a and 7b and discussed in more detail above.

What has been said about the first sipe recess 551 and the first sipe bulge 541 applies *mutatis mutandis* to the lamella plate 300.

Therefore, an embodiment of the lamella plate 300 comprises a first bulge 341 arranged on the on the first surface 311. Moreover, an embodiment of the lamella plate 300 comprises a first bulge 341 arranged on the on the first surface 311 and a first recess 351 arranged on the on second surface 312 opposite the first bulge 341. Preferably, the first recess 351 is geometrically congruent with the first bulge 341.

In an embodiment corresponding to Figs. 6a and 6b, the first bulge 341 is arranged on the first ridge 321 whereby the lamella plate further comprises a first recess 351 arranged on the on second surface 312 opposite the first bulge 341. Furthermore, the embodiment shown in Figs. 6a and 6b the lamella plate 300 further comprises a second bulge 342 arranged on the second ridge 322 and a second recess 352 arranged in the second groove 332 and opposite the second bulge 342. Preferably, the first recess 351 is geometrically congruent with the first bulge 341 and the second recess 352 is geometrically congruent with the second bulge 342.

A lamella plate 300 having on the first surface 311 a primary first footstep 421 and a secondary first footstep 422 is shown in Fig. 11a. The primary first footstep 421 has substantially the same function as the first ridge 321, i.e. it forms the supportive parts to the sipes, in particular the sipe deflection lines DS1. Thus, as discussed above, the primary first footstep 421 is provided with the first bulge 341. Moreover, the secondary first footstep 422 is provided with the second bulge 342.

The second surface of the lamella plate 300 of Fig. 11a is shown in Fig. 11b. Thus, the lamella plate 300 has, on the second surface 312 a primary second footstep 431 and a secondary second footstep 432. For the reasons discussed above, the primary second footstep 431 is provided with the first recess 351 and the secondary second footstep 432 is provided with the second recess 352. For the reasons discussed above, the first recess 351 is geometrically congruent with the first bulge 341 and the second recess 352 is geometrically congruent with the second bulge 342.

In an embodiment corresponding to Figs. 7a and 7b, the first bulge 341 is arranged in between the first ridge 321 and the second ridge 322. If the first recess 351 is geometrically congruent with the first bulge 341, it provides a sipe having an additional locking mechanism for the sipe walls.

However, if lamella plate 300 comprises the first bulge 341 without comprising the corresponding first recess 351, the sipe recess formed by the first bulge 341 may serve as an additional temporary storage for water and/or snow in this way improving friction of the tyre. What has been said about the height/depth of the first sipe bulge 541 and the first sipe recess 551 applies to first recess 351 and first bulge 341, respectively.

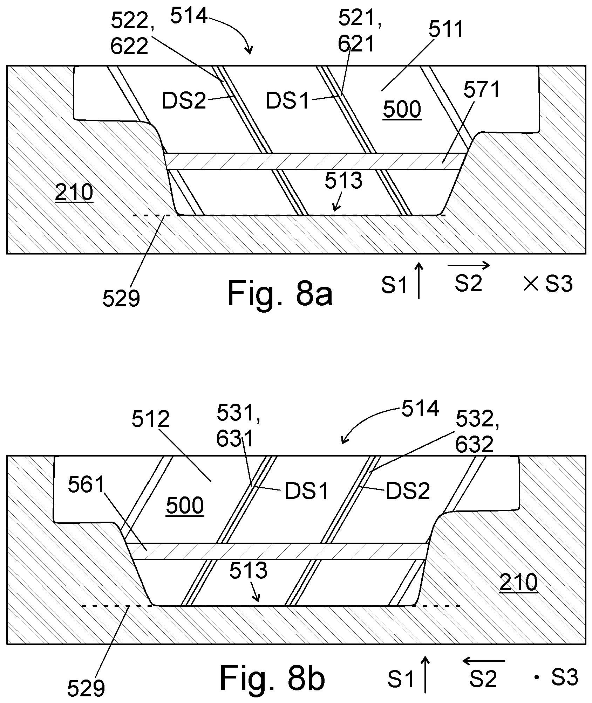

Referring to Figs. 8a and 8b, in an embodiment of the tread block arrangement 200, the tread block 210 comprises a first sipe crest 561 arranged on the second sipe wall 512. As shown in Fig. 8a, the first sipe crest 561 is a reasonably lengthy protrusion. Correspondingly, the tread block 210 comprises a first sipe slot 571 arranged in the first sipe wall 511 opposite the first sipe crest 561. The first sipe crest 561 has such a length that the first sipe crest 561 extends across the first wall ridge 531 and the second wall ridge 532 (if there are wall ridges), or the first sipe crest 561 extends across the primary second wall step 631 and the secondary second wall step 632 (if the second sipe wall 512 is provided with second wall steps 631, 632). Likewise, the first sipe slot 571 extends across the first wall groove 521 and the second wall groove 522 (if there are grooves); or the first sipe slot 571 extends across the primary first wall step 621 and the secondary first wall step 622 (if the first sipe wall 511 is provided with first wall steps 621, 622). The first sipe slot 571 is arranged opposite the first sipe crest 561. Preferably, the first sipe crest 561 is geometrically congruent with the first sipe slot 571. The first sipe bulge 541 and the second sipe bulge 542 disclosed above may be part of the first sipe crest 561 as discussed above. Likewise, the first sipe recess 551 and the second sipe recess 552 may be part of the first sipe slot 571 as discussed above.

Concerning a preferable measure, in an embodiment, a height of the first sipe crest 561 is 0.25 mm to 2.5 mm, preferably 0.75 mm to 1.5 mm. The height of the first sipe crest 561 is defined in a direction that is perpendicular to the direction S1 of the depth of the sipe, e.g. in the third direction S3. Likewise a depth of first sipe slot 571, defined in the same direction, is also 0.25 mm to 2.5 mm, preferably 0.75 mm to 1.5 mm.

Also the first sipe crest 561 in combination with the first sipe slot 571 improves the locking of the sipe walls 511, 512 thereby improving handling of the tyre.

A lamella plate 300 for forming a sipe with a sipe crest 561 and a sipe slot 571 is shown in Figs. 12a and 12b. Referring to Figs. 12a and 12b, an embodiment of the lamella plate 300 comprises a first crest 361 arranged on the on the first surface 311 and a first slot 371 arranged on the on second surface 312 opposite the first crest 361. The first crest 361 extends across the primary first footstep 421 and the secondary first footstep 422; and the first slot 371 extends across the primary second footstep 431 and the secondary second footstep 432. Preferably, the first slot 371 is geometrically congruent with the first crest 361. **In** another embodiment (not shown), first crest 361 extends across the first ridge 321 and the second ridge 322 and the first slot 371 extends across the first groove 331 and the second groove 332.

The invention relates also to a tyre, such as a pneumatic tyre for a motor vehicle, in particular to a pneumatic tyre for a motor vehicle weighing from 750 kg to 5000 kg. The tyre has a tread 110 comprising the tread block arrangement 200 as disclosed above.

## Claims

1. A tread block arrangement (200) suitable for a tyre (100) or for a tread band (150) for a tyre (100), the tread block arrangement (200) comprising:
- a tread block (210) comprising at least a first sipe (500) delimited by a first sipe wall (511), a second sipe wall (512), and a bottom (513), wherein
- first sipe (500) comprises a top opening (514), the tread block (210) comprising
- on the first sipe wall (511), a first wall groove (521) or a primary first wall step (621) defining a first sipe deflection line (DS1),
- on the second sipe wall (512) opposite the first wall groove (521), a first wall ridge (531) or a primary second wall step (631) geometrically congruent with the first wall groove (521) or the primary first wall step (621), respectively,
- on the first sipe wall (511), a second wall groove (522) or a secondary first wall step (622) defining a second sipe deflection line (DS2),
- on the second sipe wall (512) opposite the second wall groove (522) or the secondary first wall step (622), respectively, a second wall ridge (532) or a secondary second wall step (632) geometrically congruent with the second wall groove (522) or the secondary first wall step (622), respectively,
wherein
- the first sipe deflection line (DS1) extends between the bottom (513) and the top opening (514) such that at least a part of the first sipe deflection line (DS1) is straight and extends inclined relative to a direction of depth of the first sipe (500), and
- the second sipe deflection line (DS2) extends between the bottom (513) and the top opening (514) such that that at least a part of the second sipe deflection line (DS2) is straight and extends inclined relative to a direction of depth of the first sipe (500),
**characterized in that**
- the tread block (210) further comprises
∘ a first sipe recess (551) arranged in the first sipe wall (511) or the second sipe wall (512) and/or
∘ a first sipe crest (561) arranged on the second sipe wall (512) and a first sipe slot (571) arranged in the first sipe wall (511) opposite the first sipe crest (561), wherein
- the first sipe crest (561), if present, extends across
∘ the first wall ridge (531) and the second wall ridge (532) or
∘ the primary second wall step (631) and secondary second wall step (632) and
- the first sipe slot (571), if present, extends across
∘ the first wall groove (521) and the second wall groove (522) or
∘ the primary first wall step (621) and the secondary first wall step (622).

2. The tread block arrangement (200) of claim 1, comprising:
- a first boundary (B1) and a second boundary (B2) such that other parts of the tread block arrangement (200) than the boundaries (B1, B2) are arranged between the first boundary (B1) and the second boundary (B2),
- the first sipe (500) is arranged closer to the first boundary (B1) than to the second boundary (B2),
- the first sipe deflection line (DS1) extends between the bottom (513) and the top opening (514) such that the closer to the top opening (514) a point of the first sipe deflection line (DS1) is, the closer the point of the first sipe deflection line (DS1) is to the first boundary (B1), and
- the second sipe deflection line (DS2) extends between the bottom (513) and the top opening (514) such that the closer to the top opening (514) a point of second sipe deflection line (DS2) is, the closer the point of the second sipe deflection line (DS2) is to the first boundary (B1).

3. The tread block arrangement (200) of claim 1 or 2, wherein:
- the bottom (513) defines a bottom line (529),
- a straight part of the first sipe deflection line (DS1) extends between the bottom (513) and the top opening (514) such that a first primary sipe angle (β11) is arranged between the straight part of the first sipe deflection line (DS1) and a line that is parallel with the bottom line (529), wherein the first primary sipe angle (β11) is 30 to 85 degrees, and
- a straight part of the second sipe deflection line (DS2) extends between the bottom (513) and the top opening (514) such that a second primary sipe angle (β21) is arranged between the straight part of the second sipe deflection line (DS2) and the line that is parallel with the bottom line (329), wherein the second primary sipe angle (β21) is 30 to 85 degrees.

4. The tread block arrangement (200) of any of the claims 1 to 3, wherein the tread block (210) further comprises:
- a first sipe bulge (541) arranged opposite the first sipe recess (551), preferably,
- the first sipe recess (551) is geometrically congruent with the first sipe bulge (541).

5. The tread block arrangement (200) of any of the claims 1 to 4, wherein:
- the first sipe recess (551) is arranged in the first wall groove (521), the first sipe (500) further comprising
- a first sipe bulge (541) arranged on the first wall ridge (531),
- a second sipe bulge (542) arranged on the second wall ridge (532) and
- a second sipe recess (552) arranged in the second wall groove (522) opposite the second sipe bulge (542);
preferably,
- the first sipe recess (551) is geometrically congruent with the first sipe bulge (541) and
- the second sipe recess (552) is geometrically congruent with the second sipe bulge (542);
preferably,
- depths of the first and second sipe recesses (551, 552) are 0.25 mm to 2.5 mm and
- heights of the first and second sipe bulges (541, 542) are 0.25 mm to 2.5 mm.

6. The tread block arrangement (200) of any of the claims 1 to 4, wherein:
- the first sipe recess (551) is arranged
∘ between the first wall groove (521) and the second wall groove (522) or
∘ between the primary first wall step (621) and the secondary first wall step (622) or
∘ between the first wall ridge (531) and the second wall ridge (532) or
∘ between the primary second wall step (631) and the secondary second wall step (632).

7. The tread block arrangement (200) of claim 4, wherein:
- a depth of the first sipe recess (551) is 0.1 mm to 4 mm or
- the first sipe recess (551) is geometrically congruent with a/the first sipe bulge (541).

8. The tread block arrangement (200) of any of the claims 1 to 7, wherein
- a depth (d2) of the straight part of the first sipe deflection line (DS1) that extends inclined, defined as a length of a projection of the straight part of the first sipe deflection line (DS1) that extends inclined to a plane having a normal to a direction (S2) of the length of the first sipe is at least half (0.5×d1) of a depth (d1) of the first sipe (500), the depth (d1) of the first sipe (500) being defined as a distance between the top opening (514) and the bottom (513) and
- a depth of the straight part of the second sipe deflection line (DS2) that extends inclined, defined as a length of a projection of the straight part of the second sipe deflection line (DS2) that extends inclined to the plane having the normal to the direction (S2) of the length of the first sipe is at least half (0.5×d1) of the depth (d1) of the first sipe (500).

9. A tyre having (100) a tread (110) comprising the tread block arrangement (200) of any of the claims 1 to 8.

10. A lamella plate (300) for forming a first sipe (500) to a tread block (210) of a tread block arrangement (200) suitable for a tyre (100) or for a tread band (150) for a tyre (100), the lamella plate (300) comprising:
- a first surface (311) for forming a first sipe wall (511) of the first sipe (500),
- a second surface (312) opposite to the first surface (311) for forming a second sipe wall (512) of the first sipe (500),
- a bottom edge (313) for forming a bottom (513) of the first sipe (500),
- a top edge (314) opposite the bottom edge (313),
- on the first surface (311), a first ridge (321) or a primary first footstep (421) defining a first deflection line (DL1),
- on the second surface (312) opposite the first ridge (321) or the primary first footstep (421), a first groove (331) or a primary second footstep (431), respectively, geometrically congruent with the first ridge (321) or the primary first footstep (421), respectively,
- on the first surface (311), a second ridge (322) or a secondary first footstep (422) defining a second deflection line (DL2), and
- on the second surface (312) opposite the second ridge (322) or the secondary first footstep (422), a second groove (332) or a secondary second footstep (432), respectively, geometrically congruent with the second ridge (322) or the secondary first footstep (422), respectively,
wherein
- the first deflection line (DL1) extends between the bottom edge (313) and the top edge (314) such that at least a part of the first deflection line (DL1) is straight and extends inclined relative to a direction of a height of the lamella plate and
- the second deflection line (DL2) extends between the bottom edge (313) and the top edge (314) such that at least a part of the first deflection line (DL1) is straight and extends inclined relative to a direction of a height of the lamella plate
**characterized in that**
- the lamella plate (300) comprises
∘ a first bulge (341) arranged on the on the first surface (311) or the second surface (312) and/or
∘ a first crest (361) arranged on the on the first surface (311) and a first slot (371) arranged on the on second surface (312) opposite the first crest (361), wherein
- the first crest (361), if present, extends across
∘ the first ridge (321) and the second ridge (322) or
∘ the primary first footstep (421) and secondary first footstep (422) and
- the first slot (371), if present, extends across
∘ the first groove (331) and the second groove (332) or
∘ the primary second footstep (431) and the secondary second footstep (432).

11. The lamella plate (300) of claim 10, wherein
- the bottom edge (313) defines a bottom line (329),
- a straight part of the first deflection line (DL1) extends between the bottom edge (313) and the top edge (314) such that a first primary angle (α11) is arranged between the straight part of the first deflection line (DL1) and a line (AL) that is parallel with the bottom line (329), wherein the first primary angle (α11) is 30 to 85 degrees, and
- a straight part of the second deflection line (DL2) extends between the bottom edge (313) and the top edge (313) such that a second primary angle (α21) is arranged between the straight part of the second deflection line (DL2) and a line (AL) that is parallel to with the bottom line (329), wherein the second primary angle (α21) is 30 to 85 degrees.

12. The lamella plate (300) of claim 10 or 11, comprising
- a first recess (351) arranged opposite the first bulge (341);
preferably,
- the first recess (351) is geometrically congruent with the first bulge (341).

13. The lamella plate (300) of claim 10, wherein
- the first bulge (341) is arranged on the first ridge (321), the lamella plate (300) further comprising
- a first recess (351) arranged in the first groove (331) and opposite the first bulge (341);
- a second bulge (342) arranged on the second ridge (322) and
- a second recess (351) arranged in the second groove (332) and opposite the second bulge (342)
preferably,
- the first recess (351) is geometrically congruent with the first bulge (341) and
- the second recess (352) is geometrically congruent with the second bulge (342),
preferably,
- heights of the first and second bulges (341, 342) are 0.25 mm to 2.5 mm and
- depths of the first and second recesses (351, 352) are 0.25 mm to 2.5 mm.

14. The lamella plate (300) of claim 10, wherein
- the first bulge (341) is arranged
∘ between the first ridge (321) and the second ridge (322) or
∘ between the first groove (331) and the second groove (332) or
∘ between the primary first footstep (421) and secondary first footstep (422) or
∘ between primary second footstep (431) and the secondary second footstep (432);
preferably,
- a height of the first bulge (341) is 0.1 mm to 4 mm or
- the first recess (351) is geometrically congruent with a/the first bulge (341).

15. The lamella plate (300) of any of the claims 10 to 14, wherein
- the first slot (371) is geometrically congruent with the first crest (361).

16. The lamella plate (300) or the tread block arrangement (200) or the tyre (100) of any of the preceding claim, wherein
- a height (h) of the first wall ridge (531), the primary first wall step (621), the first ridge (321), or the primary first footstep (421), is 0.5 mm to 8 mm; wherein
- the first wall ridge (531), the primary first wall step (621), the first ridge (321), or the primary first footstep (421) defines the first deflection line (DL1).

## Patentansprüche

1. Laufflächenblockanordnung (200), die für einen Reifen (100) oder für ein Laufflächenband (150) für einen Reifen (100) geeignet ist, wobei die Laufflächenblockanordnung (200) umfasst:
- einen Laufflächenblock (210), der mindestens eine erste Lamelle (500) umfasst, die durch eine erste Lamellenwand (511), eine zweite Lamellenwand (512) und einen Boden (513) begrenzt ist, wobei
- die erste Lamelle (500) eine obere Öffnung (514) umfasst, wobei der Laufflächenblock (210) umfasst:
- an der ersten Lamellenwand (511) eine erste Wandnut (521) oder eine primäre erste Wandstufe (621), die eine erste Lamellenablenkungslinie (DS1) definiert,
- an der zweiten Lamellenwand (512) gegenüber der ersten Wandnut (521) eine erste Wandrippe (531) oder eine primäre zweite Wandstufe (631), die geometrisch kongruent mit der ersten Wandnut (521) beziehungsweise der primären ersten Wandstufe (621) ist,
- an der ersten Lamellenwand (511) eine zweite Wandnut (522) oder eine sekundäre erste Wandstufe (622), die eine zweite Lamellenablenkungslinie (DS2) definiert,
- an der zweiten Lamellenwand (512) gegenüber der zweiten Wandnut (522) beziehungsweise der sekundären ersten Wandstufe (622) eine zweite Wandrippe (532) oder eine sekundäre zweite Wandstufe (632), die geometrisch kongruent mit der zweiten Wandnut (522) beziehungsweise der sekundären ersten Wandstufe (622) ist,
wobei
- sich die erste Lamellenablenkungslinie (DS1) zwischen dem Boden (513) und der oberen Öffnung (514) derart erstreckt, dass mindestens ein Teil der ersten Lamellenablenkungslinie (DS1) gerade ist und sich relativ zu einer Tiefenrichtung der ersten Lamelle (500) geneigt erstreckt, und
- sich die zweite Lamellenablenkungslinie (DS2) zwischen dem Boden (513) und der oberen Öffnung (514) derart erstreckt, dass mindestens ein Teil der zweiten Lamellenablenkungslinie (DS2) gerade ist und sich relativ zu einer Tiefenrichtung der ersten Lamelle (500) geneigt erstreckt,
**dadurch gekennzeichnet, dass**
- der Laufflächenblock (210) ferner umfasst:
∘ eine erste Lamellenaussparung (551), die in der ersten Lamellenwand (511) oder der zweiten Lamellenwand (512) angeordnet ist, und/oder
∘ einen ersten Lamellenkamm (561), der an der zweiten Lamellenwand (512) angeordnet ist, und einen ersten Lamellenschlitz (571), der in der ersten Lamellenwand (511) gegenüber dem ersten Lamellenkamm (561) angeordnet ist, wobei
- sich der erste Lamellenkamm (561), sofern vorhanden, quer über
∘ die erste Wandrippe (531) und die zweite Wandrippe (532) oder
∘ die primäre zweite Wandstufe (631) und die sekundäre zweite Wandstufe (632) erstreckt und
- sich der erste Lamellenschlitz (571), sofern vorhanden, quer über
∘ die erste Wandnut (521) und die zweite Wandnut (522) oder
∘ die primäre erste Wandstufe (621) und die sekundäre erste Wandstufe (622) erstreckt.

2. Laufflächenblockanordnung (200) nach Anspruch 1, umfassend:
- eine erste Begrenzung (B1) und eine zweite Begrenzung (B2), sodass andere Teile der Laufflächenblockanordnung (200) als die Begrenzungen (B1, B2) zwischen der ersten Begrenzung (B1) und der zweiten Begrenzung (B2) angeordnet sind,
- wobei die erste Lamelle (500) näher an der ersten Begrenzung (B1) als an der zweiten Begrenzung (B2) angeordnet ist,
- wobei sich die erste Lamellenablenkungslinie (DS1) zwischen dem Boden (513) und der oberen Öffnung (514) derart erstreckt, dass, je näher ein Punkt der ersten Lamellenablenkungslinie (DS1) an der oberen Öffnung (514) liegt, der Punkt der ersten Lamellenablenkungslinie (DS1) desto näher an der ersten Begrenzung (B1) liegt, und
- wobei sich die zweite Lamellenablenkungslinie (DS2) zwischen dem Boden (513) und der oberen Öffnung (514) derart erstreckt, dass, je näher ein Punkt der zweiten Lamellenablenkungslinie (DS2) an der oberen Öffnung (514) liegt, der Punkt der zweiten Lamellenablenkungslinie (DS2) desto näher an der ersten Begrenzung (B1) liegt.

3. Laufflächenblockanordnung (200) nach Anspruch 1 oder 2, wobei:
- der Boden (513) eine Bodenlinie (529) definiert,
- sich ein gerader Teil der ersten Lamellenablenkungslinie (DS1) zwischen dem Boden (513) und der oberen Öffnung (514) derart erstreckt, dass ein erster primärer Lamellenwinkel (β11) zwischen dem geraden Teil der ersten Lamellenablenkungslinie (DS1) und einer Linie angeordnet ist, die parallel zu der Bodenlinie (529) verläuft, wobei der erste primäre Lamellenwinkel (β11) 30 bis 85 Grad beträgt, und
- sich ein gerader Teil der zweiten Lamellenablenkungslinie (DS2) zwischen dem Boden (513) und der oberen Öffnung (514) derart erstreckt, dass ein zweiter primärer Lamellenwinkel (β21) zwischen dem geraden Teil der zweiten Lamellenablenkungslinie (DS2) und der Linie angeordnet ist, die parallel zu der Bodenlinie (329) verläuft, wobei der zweite primäre Lamellenwinkel (β21) 30 bis 85 Grad beträgt.

4. Laufflächenblockanordnung (200) nach einem der Ansprüche 1 bis 3, wobei der Laufflächenblock (210) ferner umfasst:
- eine erste Lamellenausbuchtung (541), die gegenüber der ersten Lamellenaussparung (551) angeordnet ist, wobei vorzugsweise
- die erste Lamellenaussparung (551) geometrisch kongruent mit der ersten Lamellenausbuchtung (541) ist.

5. Laufflächenblockanordnung (200) nach einem der Ansprüche 1 bis 4, wobei:
- die erste Lamellenaussparung (551) in der ersten Wandnut (521) angeordnet ist, wobei die erste Lamelle (500) ferner umfasst:
- eine erste Lamellenausbuchtung (541), die an der ersten Wandrippe (531) angeordnet ist,
- eine zweite Lamellenausbuchtung (542), die an der zweiten Wandrippe (532) angeordnet ist, und
- eine zweite Lamellenaussparung (552), die in der zweiten Wandnut (522) gegenüber der zweiten Lamellenausbuchtung (542) angeordnet ist;
wobei vorzugsweise
- die erste Lamellenaussparung (551) geometrisch kongruent mit der ersten Lamellenausbuchtung (541) ist und
- die zweite Lamellenaussparung (552) geometrisch kongruent mit der zweiten Lamellenausbuchtung (542) ist;
wobei vorzugsweise
- Tiefen der ersten und der zweiten Lamellenaussparung (551, 552) 0,25 mm bis 2,5 mm betragen und
- Höhen der ersten und der zweiten Lamellenausbuchtung (541, 542) 0,25 mm bis 2,5 mm betragen.

6. Laufflächenblockanordnung (200) nach einem der Ansprüche 1 bis 4, wobei:
- die erste Lamellenaussparung (551)
∘ zwischen der ersten Wandnut (521) und der zweiten Wandnut (522) oder
∘ zwischen der primären ersten Wandstufe (621) und der sekundären ersten Wandstufe (622) oder
∘ zwischen der ersten Wandrippe (531) und der zweiten Wandrippe (532) oder
∘ zwischen der primären zweiten Wandstufe (631) und der sekundären zweiten Wandstufe (632)
angeordnet ist.

7. Laufflächenblockanordnung (200) nach Anspruch 4, wobei:
- eine Tiefe der ersten Lamellenaussparung (551) 0,1 mm bis 4 mm beträgt
oder
- die erste Lamellenaussparung (551) geometrisch kongruent mit einer/der ersten Lamellenausbuchtung (541) ist.

8. Laufflächenblockanordnung (200) nach einem der Ansprüche 1 bis 7, wobei
- eine Tiefe (d2) des geraden Teils der ersten Lamellenablenkungslinie (DS1), der sich geneigt erstreckt, definiert als eine Länge einer Projektion des geraden Teils der ersten Lamellenablenkungslinie (DS1), der sich geneigt erstreckt, auf eine Ebene mit einer Normalen zu einer Richtung (S2) der Länge der ersten Lamelle, mindestens die Hälfte (0,5xd1) einer Tiefe (d1) der ersten Lamelle (500) beträgt, wobei die Tiefe (d1) der ersten Lamelle (500) als ein Abstand zwischen der oberen Öffnung (514) und dem Boden (513) definiert ist, und
- eine Tiefe des geraden Teils der zweiten Lamellenablenkungslinie (DS2), der sich geneigt erstreckt, definiert als eine Länge einer Projektion des geraden Teils der zweiten Lamellenablenkungslinie (DS2), der sich geneigt erstreckt, auf die Ebene mit der Normalen zu der Richtung (S2) der Länge der ersten Lamelle, mindestens die Hälfte (0,5xd1) der Tiefe (d1) der ersten Lamelle (500) beträgt.

9. Reifen (100) mit einer Lauffläche (110), die die Laufflächenblockanordnung (200) nach einem der Ansprüche 1 bis 8 umfasst.

10. Lamellenplatte (300) zum Ausbilden einer ersten Lamelle (500) in einem Laufflächenblock (210) einer Laufflächenblockanordnung (200), die für einen Reifen (100) oder für ein Laufflächenband (150) für einen Reifen (100) geeignet ist, wobei die Lamellenplatte (300) umfasst:
- eine erste Oberfläche (311) zum Ausbilden einer ersten Lamellenwand (511) der ersten Lamelle (500),
- eine der ersten Oberfläche (311) gegenüberliegende zweite Oberfläche (312) zum Ausbilden einer zweiten Lamellenwand (512) der ersten Lamelle (500),
- eine Unterkante (313) zum Ausbilden eines Bodens (513) der ersten Lamelle (500),
- eine der Unterkante (313) gegenüberliegende Oberkante (314),
- an der ersten Oberfläche (311) eine erste Rippe (321) oder eine primäre erste Stufe (421), die eine erste Ablenkungslinie (DL1) definiert,
- an der zweiten Oberfläche (312) gegenüber der ersten Rippe (321) beziehungsweise der primären ersten Stufe (421) eine erste Nut (331) beziehungsweise eine primäre zweite Stufe (431), die geometrisch kongruent mit der ersten Rippe (321) beziehungsweise der primären ersten Stufe (421) ist,
- an der ersten Oberfläche (311) eine zweite Rippe (322) oder eine sekundäre erste Stufe (422), die eine zweite Ablenkungslinie (DL2) definiert, und
- an der zweiten Oberfläche (312) gegenüber der zweiten Rippe (322) beziehungsweise der sekundären ersten Stufe (422) eine zweite Nut (332) beziehungsweise eine sekundäre zweite Stufe (432), die geometrisch kongruent mit der zweiten Rippe (322) beziehungsweise der sekundären ersten Stufe (422) ist,
wobei
- sich die erste Ablenkungslinie (DL1) zwischen der Unterkante (313) und der Oberkante (314) derart erstreckt, dass mindestens ein Teil der ersten Ablenkungslinie (DL1) gerade ist und sich relativ zu einer Höhenrichtung der Lamellenplatte geneigt erstreckt, und
- sich die zweite Ablenkungslinie (DL2) zwischen der Unterkante (313) und der Oberkante (314) derart erstreckt, dass mindestens ein Teil der ersten Ablenkungslinie (DL1) gerade ist und sich relativ zu einer Höhenrichtung der Lamellenplatte geneigt erstreckt,
**dadurch gekennzeichnet, dass**
- die Lamellenplatte (300) umfasst:
∘ eine erste Ausbuchtung (341), die an der ersten Oberfläche (311) oder der zweiten Oberfläche (312) angeordnet ist, und/oder
∘ einen ersten Kamm (361), der an der ersten Oberfläche (311) angeordnet ist, und einen ersten Schlitz (371), der an der zweiten Oberfläche (312) gegenüber dem ersten Kamm (361) angeordnet ist, wobei
- sich der erste Kamm (361), sofern vorhanden, quer über
∘ die erste Rippe (321) und die zweite Rippe (322) oder
∘ die primäre erste Stufe (421) und die sekundäre erste Stufe (422) erstreckt und
- sich der erste Schlitz (371), sofern vorhanden, quer über
∘ die erste Nut (331) und die zweite Nut (332) oder
∘ die primäre zweite Stufe (431) und die sekundäre zweite Stufe (432) erstreckt.

11. Lamellenplatte (300) nach Anspruch 10, wobei
- die Unterkante (313) eine Bodenlinie (329) definiert,
- sich ein gerader Teil der ersten Ablenkungslinie (DL1) zwischen der Unterkante (313) und der Oberkante (314) derart erstreckt, dass ein erster primärer Winkel (α11) zwischen dem geraden Teil der ersten Ablenkungslinie (DL1) und einer Linie (AL) angeordnet ist, die parallel zu der Bodenlinie (329) verläuft, wobei der erste primäre Winkel (α11) 30 bis 85 Grad beträgt, und
- sich ein gerader Teil der zweiten Ablenkungslinie (DL2) zwischen der Unterkante (313) und der Oberkante (313) derart erstreckt, dass ein zweiter primärer Winkel (α21) zwischen dem geraden Teil der zweiten Ablenkungslinie (DL2) und einer Linie (AL) angeordnet ist, die parallel zu der Bodenlinie (329) verläuft, wobei der zweite primäre Winkel (α21) 30 bis 85 Grad beträgt.

12. Lamellenplatte (300) nach Anspruch 10 oder 11, umfassend
- eine erste Aussparung (351), die gegenüber der ersten Ausbuchtung (341) angeordnet ist;
wobei vorzugsweise
- die erste Aussparung (351) geometrisch kongruent mit der ersten Ausbuchtung (341) ist.

13. Lamellenplatte (300) nach Anspruch 10, wobei
- die erste Ausbuchtung (341) an der ersten Rippe (321) angeordnet ist,
wobei die Lamellenplatte (300) ferner umfasst:
- eine erste Aussparung (351), die in der ersten Nut (331) und gegenüber der ersten Ausbuchtung (341) angeordnet ist;
- eine zweite Ausbuchtung (342), die an der zweiten Rippe (322) angeordnet ist, und
- eine zweite Aussparung (351), die in der zweiten Nut (332) und gegenüber der zweiten Ausbuchtung (342) angeordnet ist,
wobei vorzugsweise
- die erste Aussparung (351) geometrisch kongruent mit der ersten Ausbuchtung (341) ist und
- die zweite Aussparung (352) geometrisch kongruent mit der zweiten Ausbuchtung (342) ist,
wobei vorzugsweise
- Höhen der ersten und der zweiten Ausbuchtung (341, 342) 0,25 mm bis 2,5 mm betragen und
- Tiefen der ersten und der zweiten Aussparung (351, 352) 0,25 mm bis 2,5 mm betragen.

14. Lamellenplatte (300) nach Anspruch 10, wobei
- die erste Ausbuchtung (341)
∘ zwischen der ersten Rippe (321) und der zweiten Rippe (322) oder
∘ zwischen der ersten Nut (331) und der zweiten Nut (332) oder
∘ zwischen der primären ersten Stufe (421) und der sekundären ersten Stufe (422) oder
∘ zwischen der primären zweiten Stufe (431) und der sekundären zweiten Stufe (432)
angeordnet ist;
wobei vorzugsweise
- eine Höhe der ersten Ausbuchtung (341) 0,1 mm bis 4 mm beträgt oder
- die erste Aussparung (351) geometrisch kongruent mit einer/der ersten Ausbuchtung (341) ist.

15. Lamellenplatte (300) nach einem der Ansprüche 10 bis 14, wobei
- der erste Schlitz (371) geometrisch kongruent mit dem ersten Kamm (361) ist.

16. Lamellenplatte (300) oder Laufflächenblockanordnung (200) oder Reifen (100) nach einem der vorhergehenden Ansprüche, wobei
- eine Höhe (h) der ersten Wandrippe (531), der primären ersten Wandstufe (621), der ersten Rippe (321) oder der primären ersten Stufe (421) 0,5 mm bis 8 mm beträgt; wobei
- die erste Wandrippe (531), die primäre erste Wandstufe (621), die erste Rippe (321) oder die primäre erste Stufe (421) die erste Ablenkungslinie (DL1) definiert.

## Revendications

1. Agencement de blocs de bande de roulement (200) approprié pour un pneumatique (100) ou pour une bande de roulement (150) destinée à un pneumatique (100), l'agencement de blocs de bande de roulement (200) comprenant :
- un bloc de bande de roulement (210) comprenant au moins une première lamelle (500) délimitée par une première paroi de lamelle (511), une seconde paroi de lamelle (512) et un fond (513), dans lequel
- la première lamelle (500) comprend une ouverture supérieure (514), le bloc de bande de roulement (210) comprenant
- sur la première paroi de lamelle (511), une première rainure de paroi (521) ou un premier gradin primaire de paroi (621) définissant une première ligne de déflexion de lamelle (DS1),
- sur la seconde paroi de lamelle (512), à l'opposé de la première rainure de paroi (521), une première nervure de paroi (531) ou un second gradin primaire de paroi (631) géométriquement congruent avec la première rainure de paroi (521) ou le premier gradin primaire de paroi (621), respectivement,
- sur la première paroi de lamelle (511), une seconde rainure de paroi (522) ou un premier gradin secondaire de paroi (622) définissant une seconde ligne de déflexion de lamelle (DS2),
- sur la seconde paroi de lamelle (512), à l'opposé de la seconde rainure de paroi (522) ou du premier gradin secondaire de paroi (622), respectivement, une seconde nervure de paroi (532) ou un second gradin secondaire de paroi (632) géométriquement congruent avec la seconde rainure de paroi (522) ou le premier gradin secondaire de paroi (622), respectivement,
dans lequel
- la première ligne de déflexion de lamelle (DS1) s'étend entre le fond (513) et l'ouverture supérieure (514), de telle sorte qu'au moins une partie de la première ligne de déflexion de lamelle (DS1) est rectiligne et s'étend de manière inclinée par rapport à une direction de profondeur de la première lamelle (500), et
- la seconde ligne de déflexion de lamelle (DS2) s'étend entre le fond (513) et l'ouverture supérieure (514), de telle sorte qu'au moins une partie de la seconde ligne de déflexion de lamelle (DS2) est rectiligne et s'étend de manière inclinée par rapport à une direction de profondeur de la première lamelle (500),
**caractérisé en ce que**
- le bloc de bande de roulement (210) comprend en outre
∘ un premier évidement de lamelle (551) agencé dans la première paroi de lamelle (511) ou la seconde paroi de lamelle (512) et/ou
∘ une première crête de lamelle (561) agencée sur la seconde paroi de lamelle (512) et une première fente de lamelle (571) agencée dans la première paroi de lamelle (511), à l'opposé de la première crête de lamelle (561), dans lequel
- la première crête de lamelle (561), si elle est présente, s'étend à travers
∘ la première nervure de paroi (531) et la seconde nervure de paroi (532), ou
∘ le second gradin primaire de paroi (631) et le second gradin secondaire de paroi (632), et
- la première fente de lamelle (571), si elle est présente, s'étend à travers
∘ la première rainure de paroi (521) et la seconde rainure de paroi (522), ou
∘ le premier gradin primaire de paroi (621) et le premier gradin secondaire de paroi (622).

2. Agencement de blocs de bande de roulement (200) selon la revendication 1, comprenant :
- une première limite (B1) et une seconde limite (B2), de telle sorte que les parties de l'agencement de blocs de bande de roulement (200) autres que les limites (B1, B2) sont agencées entre la première limite (B1) et la seconde limite (B2),
- la première lamelle (500) est agencée plus près de la première limite (B1) que de la seconde limite (B2),
- la première ligne de déflexion de lamelle (DS1) s'étend entre le fond (513) et l'ouverture supérieure (514), de telle sorte que plus un point de la première ligne de déflexion de lamelle (DS1) est proche de l'ouverture supérieure (514), plus le point de la première ligne de déflexion de lamelle (DS1) est proche de la première limite (B1), et
- la seconde ligne de déflexion de lamelle (DS2) s'étend entre le fond (513) et l'ouverture supérieure (514), de telle sorte que plus un point de la seconde ligne de déflexion de lamelle (DS2) est proche de l'ouverture supérieure (514), plus le point de la seconde ligne de déflexion de lamelle (DS2) est proche de la première limite (B1).

3. Agencement de blocs de bande de roulement (200) selon la revendication 1 ou 2, dans lequel :
- le fond (513) définit une ligne de fond (529),
- une partie rectiligne de la première ligne de déflexion de lamelle (DS1) s'étend entre le fond (513) et l'ouverture supérieure (514), de telle sorte qu'un premier angle primaire de lamelle (β11) est agencé entre la partie rectiligne de la première ligne de déflexion de lamelle (DS1) et une ligne qui est parallèle à la ligne de fond (529), dans lequel le premier angle primaire de lamelle (β11) est de 30 à 85 degrés, et
- une partie rectiligne de la seconde ligne de déflexion de lamelle (DS2) s'étend entre le fond (513) et l'ouverture supérieure (514), de telle sorte qu'un second angle primaire de lamelle (β21) est agencé entre la partie rectiligne de la seconde ligne de déflexion de lamelle (DS2) et la ligne qui est parallèle à la ligne de fond (329), dans lequel le second angle primaire de lamelle (β21) est de 30 à 85 degrés.

4. Agencement de blocs de bande de roulement (200) selon l'une quelconque des revendications 1 à 3, dans lequel le bloc de bande de roulement (210) comprend en outre :
- un premier renflement de lamelle (541) agencé à l'opposé du premier évidement de lamelle (551),
de préférence,
- le premier évidement de lamelle (551) est géométriquement congruent avec le premier renflement de lamelle (541).

5. Agencement de blocs de bande de roulement (200) selon l'une quelconque des revendications 1 à 4, dans lequel :
- le premier évidement de lamelle (551) est agencé dans la première rainure de paroi (521), la première lamelle (500) comprenant en outre
- un premier renflement de lamelle (541) agencé sur la première nervure de paroi (531),
- un second renflement de lamelle (542) agencé sur la seconde nervure de paroi (532), et
- un second évidement de lamelle (552) agencé dans la seconde rainure de paroi (522), à l'opposé du second renflement de lamelle (542) ;
de préférence,
- le premier évidement de lamelle (551) est géométriquement congruent avec le premier renflement de lamelle (541), et
- le second évidement de lamelle (552) est géométriquement congruent avec le second renflement de lamelle (542) ;
de préférence,
- les profondeurs des premier et second évidements de lamelle (551, 552) sont de 0.25 mm à 2.5 mm, et
- les hauteurs des premier et second renflements de lamelle (541, 542) sont de 0.25 mm à 2.5 mm.

6. Agencement de blocs de bande de roulement (200) selon l'une quelconque des revendications 1 à 4, dans lequel :
- le premier évidement de lamelle (551) est agencé
∘ entre la première rainure de paroi (521) et la seconde rainure de paroi (522), ou
∘ entre le premier gradin primaire de paroi (621) et le premier gradin secondaire de paroi (622), ou
∘ entre la première nervure de paroi (531) et la seconde nervure de paroi (532), ou
∘ entre le second gradin primaire de paroi (631) et le second gradin secondaire de paroi (632).

7. Agencement de blocs de bande de roulement (200) selon la revendication 4, dans lequel :
- une profondeur du premier évidement de lamelle (551) est de 0.1 mm à 4 mm, ou
- le premier évidement de lamelle (551) est géométriquement congruent avec un/le premier renflement de lamelle (541).

8. Agencement de blocs de bande de roulement (200) selon l'une quelconque des revendications 1 à 7, dans lequel
- une profondeur (d2) de la partie rectiligne de la première ligne de déflexion de lamelle (DS1) qui s'étend de manière inclinée, définie comme une longueur d'une projection de la partie rectiligne de la première ligne de déflexion de lamelle (DS1) qui s'étend de manière inclinée sur un plan ayant une normale à une direction (S2) de la longueur de la première lamelle, est au moins égale à la moitié (0.5xd1) d'une profondeur (d1) de la première lamelle (500), la profondeur (d1) de la première lamelle (500) étant définie comme une distance entre l'ouverture supérieure (514) et le fond (513), et
- une profondeur de la partie rectiligne de la seconde ligne de déflexion de lamelle (DS2) qui s'étend de manière inclinée, définie comme une longueur d'une projection de la partie rectiligne de la seconde ligne de déflexion de lamelle (DS2) qui s'étend de manière inclinée sur le plan ayant la normale à la direction (S2) de la longueur de la première lamelle, est au moins égale à la moitié (0.5xd1) de la profondeur (d1) de la première lamelle (500).

9. Pneumatique (100) ayant une bande de roulement (110) comprenant l'agencement de blocs de bande de roulement (200) selon l'une quelconque des revendications 1 à 8.

10. Plaque de lamelle (300) destinée à former une première lamelle (500) dans un bloc de bande de roulement (210) d'un agencement de blocs de bande de roulement (200) approprié pour un pneumatique (100) ou pour une bande de roulement (150) destinée à un pneumatique (100), la plaque de lamelle (300) comprenant :
- une première surface (311) destinée à former une première paroi de lamelle (511) de la première lamelle (500),
- une seconde surface (312), opposée à la première surface (311), destinée à former une seconde paroi de lamelle (512) de la première lamelle (500),
- un bord inférieur (313) destiné à former un fond (513) de la première lamelle (500),
- un bord supérieur (314) opposé au bord inférieur (313),
- sur la première surface (311), une première nervure (321) ou un premier gradin primaire (421) définissant une première ligne de déflexion (DL1),
- sur la seconde surface (312), à l'opposé de la première nervure (321) ou du premier gradin primaire (421), une première rainure (331) ou un second gradin primaire (431), respectivement, géométriquement congruent avec la première nervure (321) ou le premier gradin primaire (421), respectivement,
- sur la première surface (311), une seconde nervure (322) ou un premier gradin secondaire (422) définissant une seconde ligne de déflexion (DL2), et
- sur la seconde surface (312), à l'opposé de la seconde nervure (322) ou du premier gradin secondaire (422), une seconde rainure (332) ou un second gradin secondaire (432), respectivement, géométriquement congruent avec la seconde nervure (322) ou le premier gradin secondaire (422), respectivement,
dans laquelle
- la première ligne de déflexion (DL1) s'étend entre le bord inférieur (313) et le bord supérieur (314), de telle sorte qu'au moins une partie de la première ligne de déflexion (DL1) est rectiligne et s'étend de manière inclinée par rapport à une direction d'une hauteur de la plaque de lamelle, et
- la seconde ligne de déflexion (DL2) s'étend entre le bord inférieur (313) et le bord supérieur (314), de telle sorte qu'au moins une partie de la première ligne de déflexion (DL1) est rectiligne et s'étend de manière inclinée par rapport à une direction d'une hauteur de la plaque de lamelle,
**caractérisée en ce que**
- la plaque de lamelle (300) comprend
∘ un premier renflement (341) agencé sur la première surface (311) ou la seconde surface (312) et/ou
∘ une première crête (361) agencée sur la première surface (311) et une première fente (371) agencée sur la seconde surface (312), à l'opposé de la première crête (361), dans laquelle
- la première crête (361), si elle est présente, s'étend à travers
∘ la première nervure (321) et la seconde nervure (322), ou
∘ le premier gradin primaire (421) et le premier gradin secondaire (422), et
- la première fente (371), si elle est présente, s'étend à travers
∘ la première rainure (331) et la seconde rainure (332), ou
∘ le second gradin primaire (431) et le second gradin secondaire (432).

11. Plaque de lamelle (300) selon la revendication 10, dans laquelle
- le bord inférieur (313) définit une ligne de fond (329),
- une partie rectiligne de la première ligne de déflexion (DL1) s'étend entre le bord inférieur (313) et le bord supérieur (314), de telle sorte qu'un premier angle primaire (α11) est agencé entre la partie rectiligne de la première ligne de déflexion (DL1) et une ligne (AL) qui est parallèle à la ligne de fond (329), dans laquelle le premier angle primaire (α11) est de 30 à 85 degrés, et
- une partie rectiligne de la seconde ligne de déflexion (DL2) s'étend entre le bord inférieur (313) et le bord supérieur (313), de telle sorte qu'un second angle primaire (α21) est agencé entre la partie rectiligne de la seconde ligne de déflexion (DL2) et une ligne (AL) qui est parallèle à la ligne de fond (329), dans laquelle le second angle primaire (α21) est de 30 à 85 degrés.

12. Plaque de lamelle (300) selon la revendication 10 ou 11, comprenant
- un premier évidement (351) agencé à l'opposé du premier renflement (341) ;
de préférence,
- le premier évidement (351) est géométriquement congruent avec le premier renflement (341).

13. Plaque de lamelle (300) selon la revendication 10, dans laquelle
- le premier renflement (341) est agencé sur la première nervure (321), la plaque de lamelle (300) comprenant en outre
- un premier évidement (351) agencé dans la première rainure (331) et à l'opposé du premier renflement (341) ;
- un second renflement (342) agencé sur la seconde nervure (322), et
- un second évidement (351) agencé dans la seconde rainure (332) et à l'opposé du second renflement (342),
de préférence,
- le premier évidement (351) est géométriquement congruent avec le premier renflement (341), et
- le second évidement (352) est géométriquement congruent avec le second renflement (342),
de préférence,
- les hauteurs des premier et second renflements (341, 342) sont de 0.25 mm à 2.5 mm, et
- les profondeurs des premier et second évidements (351, 352) sont de 0.25 mm à 2.5 mm.

14. Plaque de lamelle (300) selon la revendication 10, dans laquelle
- le premier renflement (341) est agencé
∘ entre la première nervure (321) et la seconde nervure (322), ou
∘ entre la première rainure (331) et la seconde rainure (332), ou
∘ entre le premier gradin primaire (421) et le premier gradin secondaire (422), ou
∘ entre le second gradin primaire (431) et le second gradin secondaire (432) ;
de préférence,
- une hauteur du premier renflement (341) est de 0.1 mm à 4 mm, ou
- le premier évidement (351) est géométriquement congruent avec un/le premier renflement (341).

15. Plaque de lamelle (300) selon l'une quelconque des revendications 10 à 14, dans laquelle
- la première fente (371) est géométriquement congruente avec la première crête (361).

16. Plaque de lamelle (300), agencement de blocs de bande de roulement (200) ou pneumatique (100) selon l'une quelconque des revendications précédentes, dans lequel
- une hauteur (h) de la première nervure de paroi (531), du premier gradin primaire de paroi (621), de la première nervure (321) ou du premier gradin primaire (421) est de 0.5 mm à 8 mm ; dans lequel
- la première nervure de paroi (531), le premier gradin primaire de paroi (621), la première nervure (321) ou le premier gradin primaire (421) définit la première ligne de déflexion (DL1).
